(19) Europäisches Patentamt
European Patent Office
Office européen des brevets

(11) **EP 1 601 206 A1**

(12) **EUROPEAN PATENT APPLICATION**
published in accordance with Art. 158(3) EPC

(43) Date of publication:
**30.11.2005 Bulletin 2005/48**

(51) Int Cl.⁷: **H04N 7/32**

(21) Application number: **04711021.8**

(22) Date of filing: **13.02.2004**

(86) International application number:
**PCT/JP2004/001541**

(87) International publication number:
**WO 2004/075562 (02.09.2004 Gazette 2004/36)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **19.02.2003 JP 2003040804**

(71) Applicant: **MATSUSHITA ELECTRIC INDUSTRIAL CO., LTD.**
**Kadoma-shi, Osaka 571-8501 (JP)**

(72) Inventors:
• **ABE, Kiyofumi**
  **Osaka 570-0008 (JP)**
• **KADONO, Shinya**
  **Nishinomiya-shi, Hyogo 662-0871 (JP)**
• **KONDO, Satoshi**
  **Kyoto 614-8361 (JP)**

(74) Representative:
**Pautex Schneider, Nicole Véronique et al**
**Novagraaf Internatinal SA**
**25, Avenue du Pailly**
**1220 Les Avanchets - Geneva (CH)**

(54) **IMAGE DECODING DEVICE, IMAGE ENCODING DEVICE, AND METHOD THEREOF**

(57)    The picture decoding apparatus (1100) decodes a coded stream including a moving picture stream that has pictures of different sizes with reference to decoded pictures. The picture memory (203) includes a memory area for holding the decoded pictures. The picture memory dividing method specification unit (210) divides the memory area of the picture memory (203) into picture areas of a predetermined size. The picture memory control unit (206) sequentially stores all the data of one newly decoded picture in the sequential memory areas which are formed with one or more picture areas of the picture memory (203).

FIG. 11

1100

**Description**

**Background Art**

The present invention relates to a decoding method and a coding method of a moving picture which perform an inter-picture prediction by referring to the pictures which have been coded or decoded, in particular, to a memory management method of the picture memory which accumulates decoded pictures.

**Disclosure of Invention**

Recently, with the arrival of the multimedia era in which sound, image and other pixel values are integrated, the conventional informative media, such as a newspaper, a magazine, a TV, a radio and a telephone, which is a means to transmit information to people, has become a subject for the multimedia. In general, the multimedia refers to the expression of not only characters, but simultaneously linked graphics, sound and especially image. In order to make such conventional informative media as described above a subject for the multimedia, it is essential to express the information in a digital format.

However, if the information content of each informative media as described above is estimated as a digital information content, the following information contents will be necessary: (i) for characters, 1-2bytes per character, (ii) for sound, 64kbits per second (telephone quality), and (iii) for moving pictures, more than 100Mbits per second (present TV reception quality); thus it is not feasible to keep the vast amount of information of the informative media as it is in the digital format. For example, a TV telephone is actually used by ISDN (Integrated Services Digital Network) which has the transmission speed of 64kbps-1.5Mbps. However, it is impossible to transmit the image of a TV camera as it is by ISDN.

Thus, the compressing technology of information is necessary. For example, in the case of a TV telephone, the moving picture compressing technology of H.261 and H.263 STD, internationally standardized by ITU (Telecommunication Standardization Sector of International Telecommunication Union) is used. Also, according to the information compressing technology of MPEG-1 STD, it is possible to input image information as well as sound information in a regular music CD (compact disc).

Here, MPEG (Moving Picture Experts Group) is an international standard of the digital compressing of a moving picture signal. MPEG-1 is a standard that compresses a moving picture signal up to 1.5Mbps, or TV signal information to about one-hundreds. The transmission speed for a MPEG-1 STD is mainly limited to about 1.5Mbps. MPEG-2 which is standardized to achieve a further high image quality compresses a moving picture signal to 2-15Mbps.

Moreover, recently MPEG-4 which has a higher compressibility has been standardized by the work group (ISO/IEC JTC1/SC29/WG11) which has developed the standardization of MPEG-1 and MPEG-2. Initially, MPEG-4 was not only capable of the highly efficient coding with the low bit rate, but also the powerful error tolerance technology which can lessen the subjective image quality deterioration, even if the transmission path error occurs. At present the standardization activity of H.264 as the next generation image coding formula is promoted collaboratively by ISO/IEC and ITU.

Generally, a moving picture coding compresses the amount of information by reducing the redundancy of the time direction and the spatial direction. The inter-picture prediction coding for reducing the time redundancy (i) refers to either of the preceding or following pictures, (ii) estimates the movement and makes a predictive picture per block, and (iii) codes the difference between the acquired predictive picture and the present picture.

Here, a picture is a term which means a piece of image: in a progressive picture it means a frame; and in an interlace picture it means a frame or a field. Here, an interlace picture is an image in which one frame is formed by two fields of different times. The coding and decoding processes of the interlace picture are capable of processing one frame (a) as a frame, (b) as two fields, and (c) as a frame structure or as a field structure per block within a frame.

Although the following picture is explained as a frame of the progressive picture, a frame or a field of the interlace picture can be explained in the similar manner.

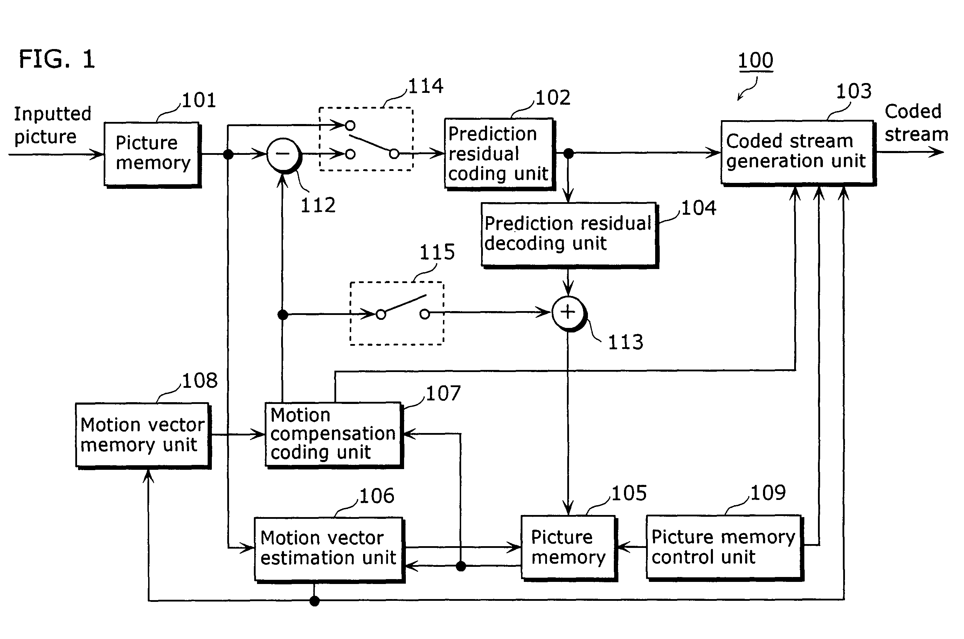

FIG.1 is a block diagram showing a structure of the conventional image coding apparatus 100. The image coding apparatus 100 includes: the picture memory 101, the prediction residual coding unit 102, the coded stream generation unit 103, the prediction residual decoding unit 104, the picture memory 105, the motion vector estimation unit 106, the motion compensation coding unit 107, the motion vector memory unit 108, the picture memory control unit 109, the difference calculation unit 112, the addition calculation unit 113, the switch 114 and the switch 115.

The moving picture for coding is inputted into the picture memory 101 per picture in the order of display. Then, the picture memory 101 arranges the pictures in the order of coding. Furthermore, each picture is divided into so called macroblocks, for example, a block of horizontal 16×vertical 16 pixels; and the following procedures will be performed per block.

The input picture signal read out from the picture memory 101 is inputted into the difference calculation unit 112; and the difference picture signal acquired by taking the difference between the input picture signal and the predictive picture signal outputted by the motion compensation coding unit 107 is outputted to the prediction residual coding unit 102. The prediction residual coding unit 102 outputs a residual signal by performing a picture coding process such as a frequency transform or a quantization. The residual signal is inputted into the prediction residual decoding unit 104; and a residual decoding signal is outputted by performing a picture decoding process such as an inverse quantization or an inverse frequency transform. The addition calculation unit 113 generates a restructuring picture signal by adding the residual decoding signal and the predictive picture signal; and the acquired restructuring picture signal is stored in the picture memory 105.

On the other hand, the input picture signal per macroblock read out from the picture memory 101 is also inputted into the motion vector estimation unit 106. Here, one piece or plural pieces of coded pictures stored in the picture memory 105 are the subject for estimation. The motion vector which indicates the location by estimating the image area which is the closest to the input picture signal and the reference picture index which indicates the selected pictures are determined. The motion vector is estimated per block which is a unit of the further divided macroblocks, and the acquired motion vector is stored in the motion vector memory unit 108. The motion compensation coding unit 107 uses the motion vector and the reference picture index which are estimated by the procedures as described above. Then, the motion compensation coding unit 107 takes out the optimum image area from the coded pictures stored in the picture memory 105, and generates a predictive picture.

The coded stream generation unit 103 performs a variable-length coding to the coding information such as the motion vector, the reference picture index and the residual coding signal outputted by the series of procedures as described above; thus the coded stream outputted by this coding procedures is acquired.

The procedures as described above are the operations in the case where the inter-picture prediction coding is performed; and these procedures are switched with the intra-picture prediction coding by the switch 114 and the switch 115. In the case of the intra picture coding, the predictive picture is not generated by the motion compensation coding unit 107. Instead, the predictive picture of the area for coding is generated from the coded area within the same picture; and the difference picture signal is generated by taking the difference. As well as the inter-picture prediction coding, the difference picture signal is converted to the residual coding signal in the prediction residual coding unit 102, and variable-length coded by the coded stream generation unit 103. Consequently, the outputted coded stream is acquired.

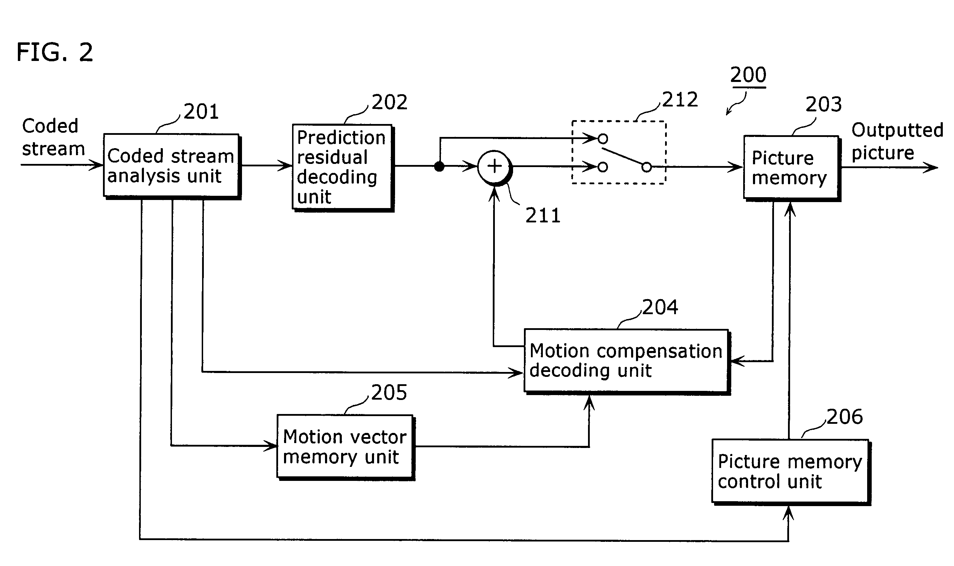

FIG.2 is a block diagram showing a structure of the conventional image decoding apparatus 200. The image decoding apparatus 200 includes: the coded stream analysis unit 201, the prediction residual decoding unit 202, the picture memory 203, the motion compensation decoding unit 204, the motion vector memory unit 205, the picture memory control unit 206, the addition calculation unit 211 and the switch 212.

First, the coded stream analysis unit 201 extracts each of the information such as the motion vector, the reference picture index and the residual coding signal from the inputted coded stream. Each of the information extracted by the coded stream analysis unit 201 as described above is respectively outputted as following: the motion vector to the motion vector memory unit 205, the reference picture index to the motion compensation decoding unit 204, and the residual coding signal to the prediction residual decoding unit 202.

The prediction residual decoding unit 202 performs a picture decoding operation such as an inverse quantization and an inverse frequency transform to the inputted residual coding signal, and outputs the residual decoding signal. The addition calculation unit 211 adds the residual decoding signal and the predictive picture signal outputted from the motion compensation decoding unit 204. Then, the addition calculation unit 211 generates the restructuring picture signal, and stores the acquired restructuring picture signal in the picture memory 203.

The motion compensation decoding unit 204 uses the motion vector inputted from the motion vector memory unit 205 and the reference picture index inputted from the coded stream analysis unit 201. Then, the motion compensation decoding unit 204 takes out the optimum image area for the predictive picture from one or plural decoded pictures which are stored in the picture memory 203.

The decoded pictures generated by the series of procedures as described above are outputted as the picture signal for display from the picture memory 203, according to the displayed timing.

The procedures as described above are the operations performed in the case of the inter-picture prediction decoding; and these procedures are switched with the intra-picture prediction decoding by the switch 212. In the case of the intra-picture prediction decoding, the predictive picture is not generated by the motion compensation decoding unit 204. Instead, (i) the predictive picture of the area for decoding is generated from the decoded area within the same picture, (ii) the predictive picture and the residual decoding signal are added, and (iii) the restructuring picture signal is generated. The acquired restructuring picture signal is stored in the picture memory 203, and outputted as the picture signal for display, according to the displayed timing.

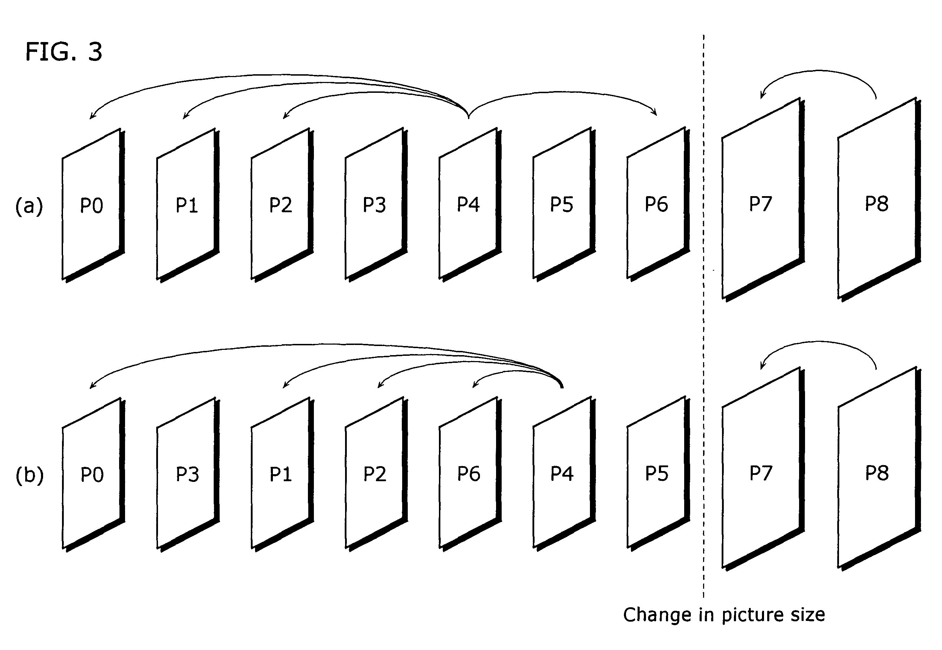

(a) and (b) in FIG. 3 are the diagrams for explaining the reference relations of the pictures in the inputted image. (a) in FIG. 3 shows the pictures arranged in the order of display; and (b) in FIG. 3 shows the pictures arranged in the order of coding. The number added to "P" of each picture shows the number of the display order for the picture.

Such number as described above is given to each picture so that all the numbers are in the rising order when each picture is arranged in the order of display as in (a) in FIG. 3. Also, the arrows in FIG. 3 show the reference relations among the pictures in the inter-picture prediction coding or the inter-picture prediction decoding; and the picture of the root of the arrows can arbitrarily refer to one or two of the pictures of the tip of the arrows.

For example, P4 performs coding or decoding referring to P0, P1, P2 and P6. The plural pictures used for the reference need to be coded or decoded before the picture P4, and be stored as the reference pictures in the picture memory. As in (b) in FIG. 3 where the pictures are arranged in the order of coding, it is noticeable that all the pictures referred by P4 are located in front of P4.

In the procedures of coding and decoding, the picture P4 selects one or two pieces which are the optimum among the plural pictures used for the reference per block, and uses the selected pictures as the reference pictures for the inter-picture prediction coding and the inter-picture prediction decoding which will be explained later.

Each picture stored in the picture memory is attached with the information that indicates whether or not it can be used for reference. The picture that is not used for reference should be immediately deleted from the picture memory; however, even if it is known that the picture is not used for reference, it needs to wait for the other pictures to be decoded until its turn to be displayed comes. For example, P3 of (b) in FIG. 3 is the second to be decoded; however, it is the fourth to be displayed in (a) in FIG. 3. Thus, P3 has to be stored in the picture memory until P1 and P2 are decoded. The picture such as P3 is called the "display-waiting picture" or the "non-reference picture". The picture that can be used for reference is called the "reference picture".

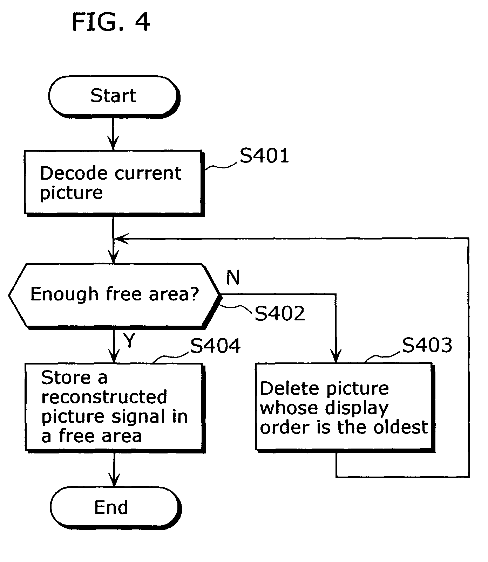

Generally, the picture signals restructured in (a) the addition calculation unit 113 of the image coding apparatus 100, and (b) the addition calculation unit 211 of the image decoding apparatus 200 are respectively accumulated in the picture memory 105 and the picture memory 203 under the control of the picture memory control unit 109 and the picture memory control unit 206 as described below. FIG. 4 is a flow chart showing the hold controlling operation of the reconstructed picture signal into the picture memory 203 in the image decoding apparatus 200. When the current picture is decoded (S401) and the newly reconstructed picture signal is generated, the picture memory control unit 206 judges whether or not the picture memory 203 has enough free area to hold the generated reconstructed picture signal (S402). If the picture memory 203 does not have enough free area to hold the generated reconstructed picture signal, the picture memory control unit 206 deletes the oldest picture in the order of display, already stored in the picture memory 203 (S403). In this manner the picture memory control unit 206 sequentially deletes the already stored pictures from the oldest one in the order of display by repeating the step S402 and the step S403 until the picture memory 203 has enough free area to hold newly reconstructed picture signal. Thus, when the picture memory 203 has enough free area to hold the newly reconstructed picture signal, it stores the newly reconstructed picture signal in the free area (S404). Here, the free area means the area that enables the corresponding area within the memory to be reused by other data. Also, deleting means the procedure to enable the use of the memory area for accumulating other data; and it can be performed in the same manner both in the case of physically erasing the data and allowing only to overwrite without physically erasing the data. (refer to "Joint Final Committee Draft (JFCD) of Joint Video Specification (ITU-T Rec. H.264 | ISO/IEC 14496-10 AVC)" 7.4.3.3 P.65, E.2.1 P.252)

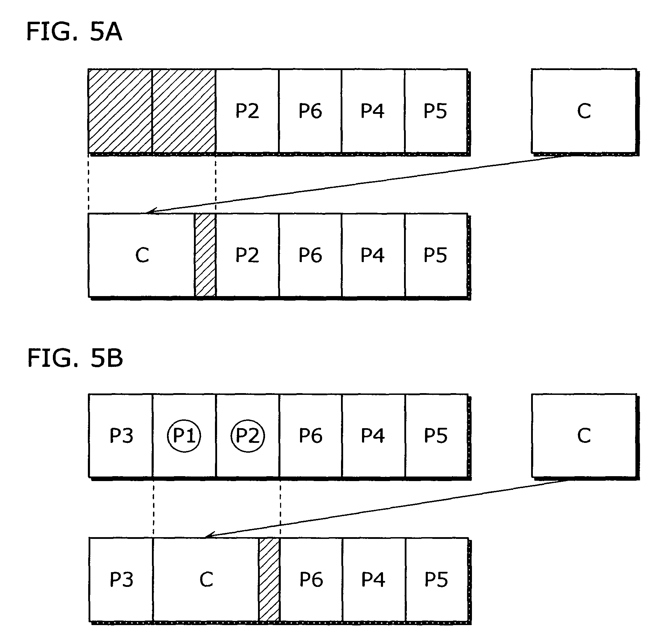

FIG. 5A, FIG. 5B, FIG. 6A, FIG. 6B, FIG. 7A and FIG. 7B are the diagrams showing the examples of the use of the memory area in the case where the picture memory is managed according to the procedures as shown in FIG. 4.

FIG. 5A is a diagram showing the holding example of a picture to be decoded in the case where the picture size is changed from small to large and the picture memory 203 has enough free area to hold the large picture. The head part of FIG. 5A shows the situation where the picture memory 203 has enough free area (the oblique lined part) to accumulate the decoded picture C. This example shows the situation where P2, P6, P4 and P5 of the picture stream of FIG. 3 are accumulated in the picture memory, and P7 (=the picture C) is decoded. In such case as described above, as shown in the bottom part of FIG. 5A, it is possible to accumulate the decoded picture C as it is in the head of the free area of the picture memory 203. In other words, the pictures that are already accumulated in the picture memory are not deleted.

FIG. 5B shows a diagram of a holding example of a picture to be decoded in the case where the picture size is changed from small to large, and the picture memory 203 does not have enough free area to hold the large picture. In FIG. 5B the pictures with the numbers circled with O are the pictures that should be deleted from the picture memory 203 in order to newly hold the picture C. The head part of FIG. 5B shows the situation where the picture memory 203 does not have enough free area to accumulate the decoded picture C. This example shows the situation where P3, P1, P2, P6, P4 and P5 of the picture stream of FIG. 3 are accumulated in the picture memory, and P7 is decoded at present (that is, C=P7). In such case as described above, it is necessary to retain an area to accumulate the newly decoded picture C by deleting the pictures accumulated in the picture memory 203 before the picture size is changed. In this example, it is noticeable that the picture C, after the change of the picture size, is larger than that of prior-change of the picture size, and the two pictures that are already stored need to be deleted in order to newly hold the picture C. Next, the picture to be deleted is sequentially selected from the oldest one of the display order information that each picture has. In this example, the display order information of P1 is the oldest in the picture memory 203, and it is noticeable that the display order information becomes newer in the order of P1, P2, P3... The picture memory control unit 206 judges one or plural pictures to be deleted according to such procedures as described above. Then, the picture memory control unit 206 outputs the judging result to the picture memory 203, and deletes the picture. In the example as shown in the head part of FIG. 5B, P1 and P2 are deleted by such procedures as described above; and the decoded picture C is accumulated in the head part of the newly generated free area as shown in FIG. 5B.

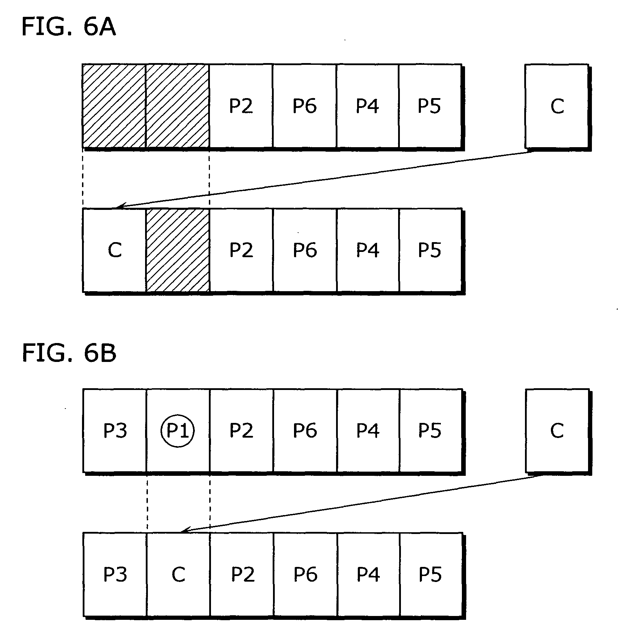

FIG. 6A shows a diagram of a holding example of a picture to be decoded in the case where (i) the picture size is not changed, (ii) the picture that has a different picture size from the picture to be decoded does not exist in the picture memory, and (iii) the picture memory 203 has enough free area to hold the newly decoded picture C. In other words, it is an example that probably happens in the case where the picture size is not changed in the temporal proximity of the picture C, or the stream where the change of the picture size does not happen is decoded. In such case as described above, the pictures that are already stored in the picture memory 203 and the newly decoded picture C all have the same picture size. Thus, in order to hold the newly decoded picture C, only one of the pictures is deleted from the picture memory 203. Therefore, the picture memory control unit 206 checks the free area of the picture memory 203, and makes the following judgments: (a) to write the picture C in if there is enough free area to hold the picture C, and (b) to delete one picture if there is not enough free area to hold the picture C. The pictures accumulated in the picture memory 203 have the information indicating the display order, in addition to the picture data. The picture memory control unit 206 checks the display order information. Then, the picture memory control unit 206 judges the picture to be deleted, and transmits it as the judging result to the picture memory 203 that only one picture whose display order information is the oldest should be deleted. As a result, the decoded picture C is accumulated in the generated free area.

The head part of FIG. 6A shows the situation where the picture memory 203 has enough free area to accumulate the newly decoded picture C. This example shows the situation where P2, P6, P4 and P5 of the picture stream of FIG.3 are accumulated in the picture memory and P7 is decoded at present (that is, C=P7). In such case as described above, as shown in the bottom part of FIG. 6A, it is possible to accumulate the picture C as it is in the free area. In other words, the pictures that are already accumulated in the picture memory are not deleted.

FIG. 6B shows a holding example of a picture to be decoded in the case where (i) the picture size is not changed, (ii) the picture that has a different picture size from the picture to be decoded does not exist in the picture memory, and (iii) the picture memory 203 does not have enough free area to hold the newly decoded picture C. The head part of FIG. 6B shows the situation where the picture memory does not have enough free area to accumulate the decoded picture C. This example shows the situation where P3, P1, P2, P6, P4 and P5 of the picture stream in FIG. 3 are accumulated in the picture memory, and P7 is decoded at present (that is, C=P7). In such case as described above, it is necessary to retain an area to accumulate the newly decoded picture C by deleting only one of the pictures accumulated in the picture memory 203 before the picture size is changed. The picture to be deleted is sequentially selected from the oldest one of the display order information that each picture has. In this example, it is noticeable that the display order information of P1 is the oldest in the picture memory 203. The picture memory control unit 206 judges the picture to be deleted according to such procedures as described above. Then, the picture memory control unit 206 outputs the judging result to the picture memory 203, and deletes the picture. In the example as shown in the head part of FIG. 6B, P1 is deleted by such procedures as described above; and the decoded picture C is accumulated in the newly generated free area as shown in the bottom part of FIG. 6B.

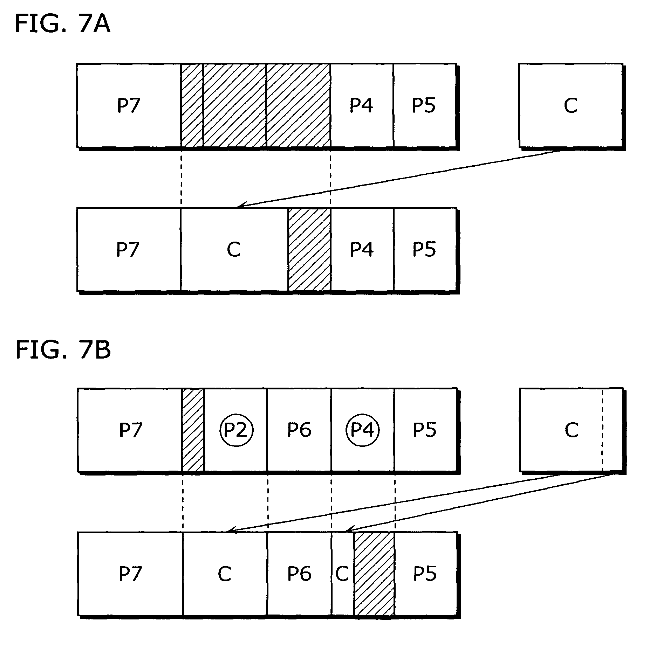

FIG. 7A shows a diagram of a holding example of a picture to be decoded in the case where (i) the picture size is not changed, (ii) the picture that has a different picture size from the picture to be decoded exists in the picture memory, and (iii) the picture memory 203 has enough free area to hold the newly decoded picture C. In other words, it is an example that probably happens in the case where the picture to be decoded is decoded before a long time passes after the picture size is changed. The picture memory control unit 206 checks the free area of the picture memory 203. Then, the picture memory control unit 206 does not change anything if there is enough free area to hold the newly decoded picture C. And, the picture memory control unit 206 judges the number of the pictures to be deleted and the pictures to be deleted, by comparing (a) the size of the picture C that is newly decoded after the change of the picture size and (b) the size of the picture C before the change of the picture size, if there is not enough free area to hold the picture C. In the case where the picture memory control unit 206 (i) sequentially deletes only the necessary pieces of pictures from the one whose display order information is the oldest, and (ii) stores the newly decoded picture C in the newly generated free area, the picture memory control unit 206 specifies the picture to be deleted by checking the display order information as described above. The picture to be deleted is transmitted from the picture memory control unit 206 to the picture memory 203. As a result, the newly decoded picture C is accumulated in the generated free area.

The head part of FIG. 7A shows the situation where the picture memory 203 has enough free area to accumulate the newly decoded picture C. This example shows the situation where P4, P5, and P7 of the picture stream of FIG.3 are accumulated in the picture memory and P8 is decoded at present (that is, C=P8). In such case as described above, as shown in the bottom part of FIG. 7A, it is possible to accumulate the picture C as it is in the free area. In other words, the pictures that are already accumulated in the picture memory are not deleted.

FIG. 7B shows a holding example of a picture to be decoded in the case where (i) the picture size is not changed, (ii) the pictures that have a different picture size from the picture to be decoded exists in the picture memory, and (iii) the picture memory 203 does not have enough free area to hold the newly decoded picture C. The head part of FIG. 7B shows the situation where the picture memory does not have enough free area to accumulate the newly decoded picture C. This example shows the situation where P2, P6, P4, P5, and P7 of the picture stream in FIG. 3 are accumulated in the picture memory, and P8 is decoded at present (that is, C=P8). In such case as described above, it is necessary to retain an area to accumulate the newly decoded picture C by deleting the pictures accumulated in the picture memory 203 before the picture size is changed. In this example, it is noticeable that the picture C, after the change of the picture size, is larger than the picture C, before the change of the picture size; and the two pieces of pictures need to be further deleted, even if the already free area for holding the picture C is used. Next, the picture to be deleted is sequentially selected from the oldest one of the display order information that each picture has. In this example, it is noticeable that the display order information of P2 is the oldest; and the display order information becomes newer in the order of P2, P4, P5...Thus, the picture memory control unit 206 judges one or plural pictures to be deleted according to such procedures as described above. Then, the picture memory control unit 206 outputs the judging result to the picture memory 203, and deletes the picture. In the example as shown in the head part of FIG. 7B, P2 and P4 are deleted by such procedures as described above; and the newly decoded picture C is accumulated in the newly generated free area as shown in the bottom part of FIG. 7B.

However, according to the decoding method explained with the conventional technology, because the pictures to be deleted, P2 and P4 are stored in the physically separate areas within the picture memory 203, as happened in the example of the bottom part of FIG. 7B, the situation where the newly decoded picture is divided and accumulated in the physically separate areas occurs. In particular, depending on the combination of the picture sizes of the pictures which are included in the stream for coding, there is a probability that one picture is divided into different areas in a very complicated way. In such case where the pictures that are accumulated in the physically separate areas are used as reference pictures as described above, the access to the picture memory becomes complicated, and there is a probability that the decrease of the access speed and the decoding speed is caused.

An object of the present invention, in view of the above problem, is to provide the management method of the picture memory that prevents the efficiency of the access to the picture memory from decreasing, in the case where the picture size may change at the beginning of or in the middle of the moving picture stream.

## DISCLOSURE OF INVENTION

The picture decoding apparatus according to the present invention for decoding a coded stream including a moving picture stream that has pictures of different sizes, with reference to a decoded picture, comprises: a picture memory including a memory area for holding decoded pictures; a memory division unit operable to divide the memory area of the picture memory into division areas of a predetermined size; and a storage unit operable to sequentially store all data of one newly decoded picture in sequential memory areas which are formed with one or more of the division areas of said picture memory.

Thus, it is possible to provide the picture decoding apparatus that prevents the efficiency of the access to the picture memory from decreasing, in the case where the picture size may change at the beginning of or in the middle of the moving picture stream.

Also, such picture decoding apparatus as described above further comprises a size change judgment unit operable to judge whether or not a picture size has been changed by comparing a picture size of a newly decoded picture and a picture size of a picture just decoded before, wherein in the case where it is judged that the picture size of the newly decoded picture has been changed, said memory division unit divides the memory area so that the size of the division area becomes the picture size of the newly decoded picture.

Thus, it is possible to provide the management method of the picture memory that prevents the efficiency of the access to the picture memory from decreasing, in the case where the picture size may change at the beginning of or in the middle of the moving picture stream.

Moreover, such picture decoding apparatus as described above further comprises a reading unit operable to read division information indicating a division method of the memory area from the coded stream, wherein said memory division unit divides the memory area according to the read division information.

Thus, it is possible to realize the management method of the picture memory that prevents the efficiency of the access to the picture memory from decreasing without significantly increasing the throughput of the picture decoding apparatus.

Furthermore, the present invention can be realized as a moving picture content delivery system which distributes coded moving picture contents from a distribution server including a coding apparatus for moving pictures and reproduces the distributed moving picture contents in a user's side terminal apparatus including a decoding apparatus for moving pictures. In addition, the present invention is capable of realizing the following: (a) individual units such as a distribution server and a user's side terminal apparatus which form a moving picture content delivery system, (b) a coding apparatus and a decoding apparatus included in the distribution server and the user's side terminal, (c) a coding method and a decoding method which have characteristic units, as steps, with which the moving picture content delivery system is equipped, and (d) a program which has a computer perform such steps as described above. Needless to say, such program as described above can be provided via a record medium such as a CD-ROM or a transmission medium such as the Internet.

**Further Information about Technical Background to this Application**

The disclosure of Japanese Patent Application No. 2003-040804 filed on February 19, 2003 including specification, drawings and claims is incorporated herein by reference in its entirety.

**Brief Description of Drawings**

FIG. 1 is a block diagram showing a structure of the conventional picture coding apparatus;
FIG. 2 is a block diagram showing a structure of the conventional picture decoding apparatus;

(a) and (b) in FIG. 3 are diagrams explaining reference relations of the pictures among the inputted pictures. (a) in FIG. 3 shows a situation where the pictures are arranged in the display order. (b) in FIG. 3 shows a situation where the pictures are arranged in the order of coding;

FIG. 4 is a flow chart showing a holding control operation of the restructuring picture signal into the picture memory in the picture decoding apparatus as shown in FIG. 2;
FIG. 5A is a diagram showing a holding example of a picture for decoding in the case where the picture size is changed from small to large, and the picture memory has enough free area to hold the enlarged picture. FIG. 5B is a diagram showing a holding example of a picture for decoding in the case where the picture size is changed from small to large, and the picture memory does not have enough free area to hold the enlarged picture;
FIG. 6A is a diagram showing a holding example of a picture for decoding in the case where (i) the picture size is not changed, (ii) the picture memory does not have any pictures of different size from the picture to be decoded, and (iii) the picture memory has enough free area to hold the newly decoded picture C. FIG. 6B is a diagram showing a holding example of the picture to be decoded in the case where (i) the picture size is not changed, (ii) the picture memory does not have any pictures of different size from the picture for decoding, and (iii) the picture memory does not have enough free area to hold the newly decoded picture C;
FIG. 7A is a diagram showing a holding example of the picture for decoding in the case where (i) the picture size is not changed, (ii) the picture memory has the pictures of different size from the picture C, and (iii) the picture memory has enough free area to hold the newly decoded picture C. FIG. 7B is a diagram showing a holding example of the picture to be decoded in the case where (i) the picture size is not changed, (ii) the picture memory has the pictures of different size from the newly decoded picture C, and (iii) the picture memory does not have enough free area to hold the newly decoded picture C;

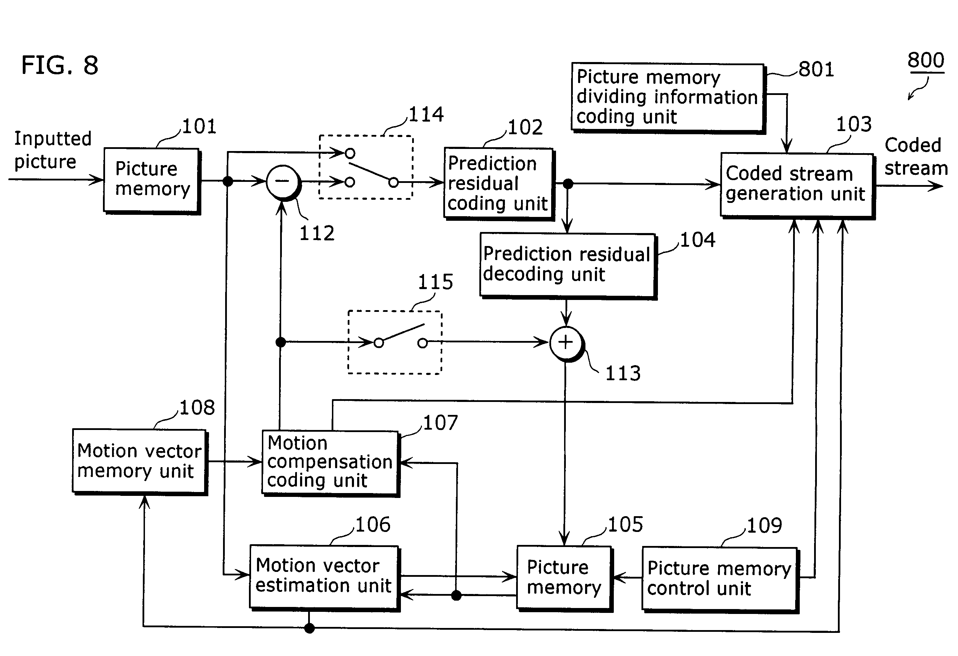

FIG. 8 is a block diagram showing a structure of the picture coding apparatus according to the first embodiment;

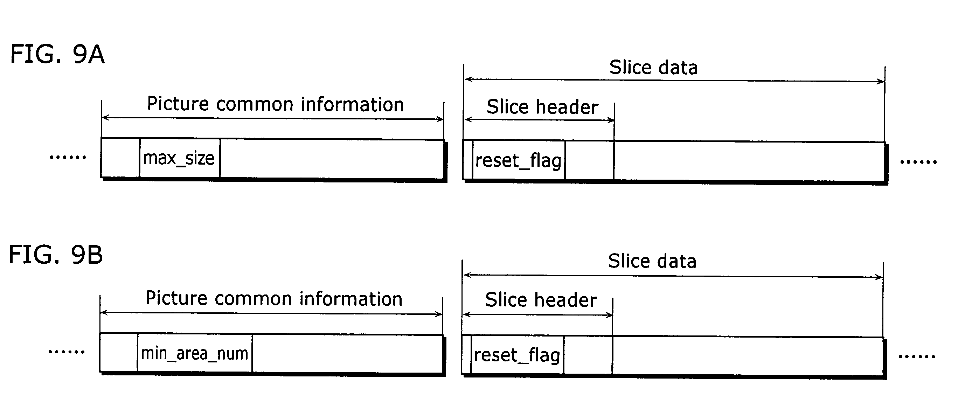

FIG. 9A and FIG. 9B are diagrams showing a data structure of a coded stream generated by the picture coding apparatus 800 according to the present embodiment. FIG. 9A is a diagram showing an example of the coded stream in the case where the information of the biggest picture size which may be included in the stream is coded. FIG. 9B is a diagram showing an example of the coded stream in the case where the picture memory is divided based on the biggest picture size which may be included in the stream, and the number of areas which can be included in the picture memory is coded;

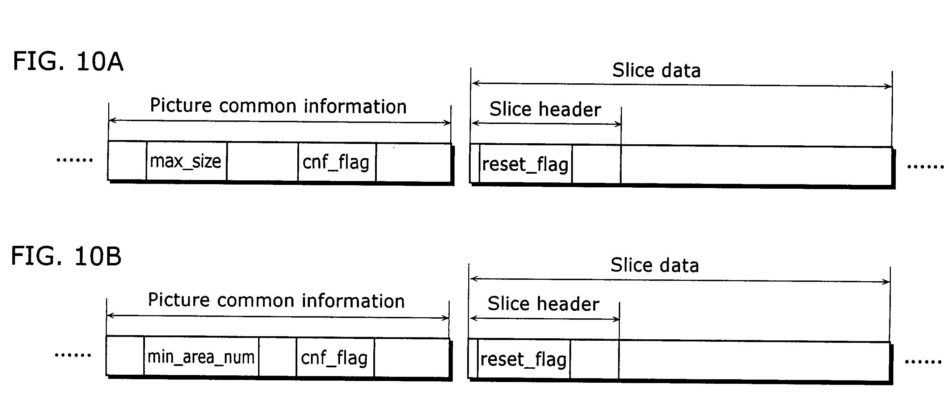

FIG. 10A and FIG. 10B are diagrams showing an example of the coded stream in the case where additional information is written in the area of the picture common information of the coded stream shown in FIG. 9A and FIG. 9B;

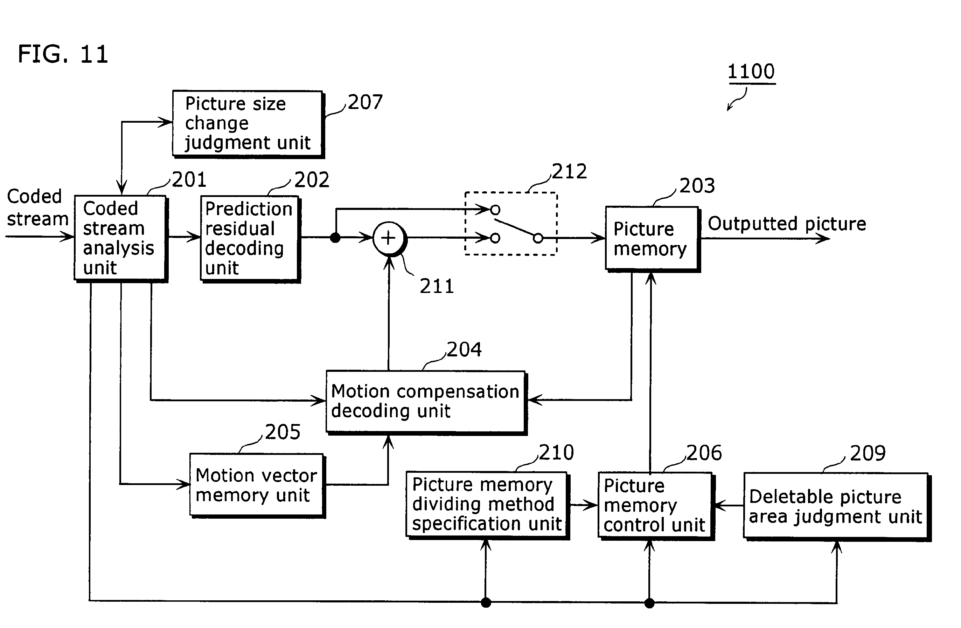

FIG. 11 is a block diagram showing a structure of the image decoding apparatus of the present embodiment;

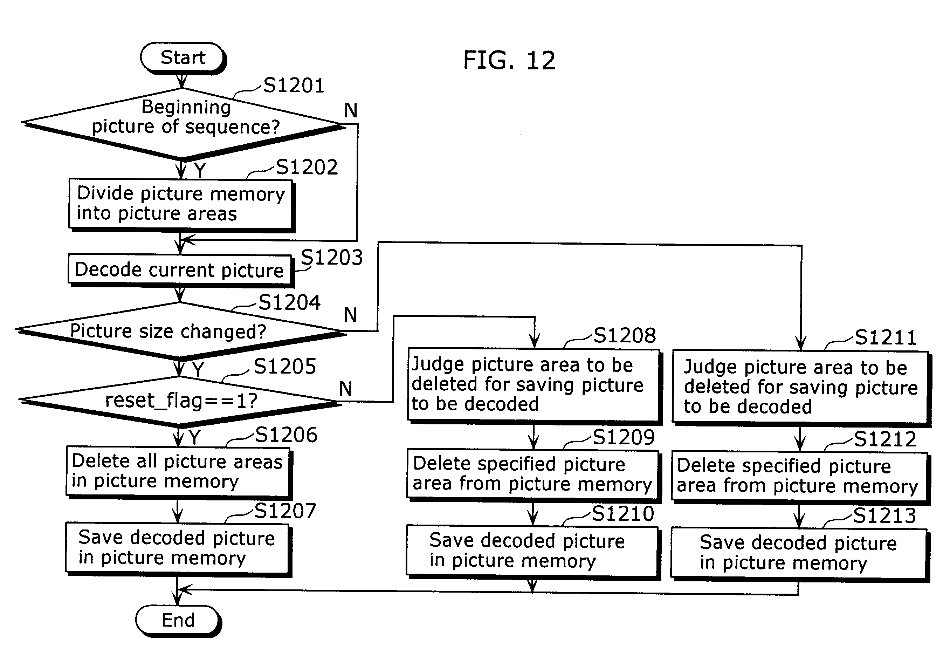

FIG. 12 is a flow chart showing the order of decoding procedures of the image decoding apparatus as shown in FIG. 11;

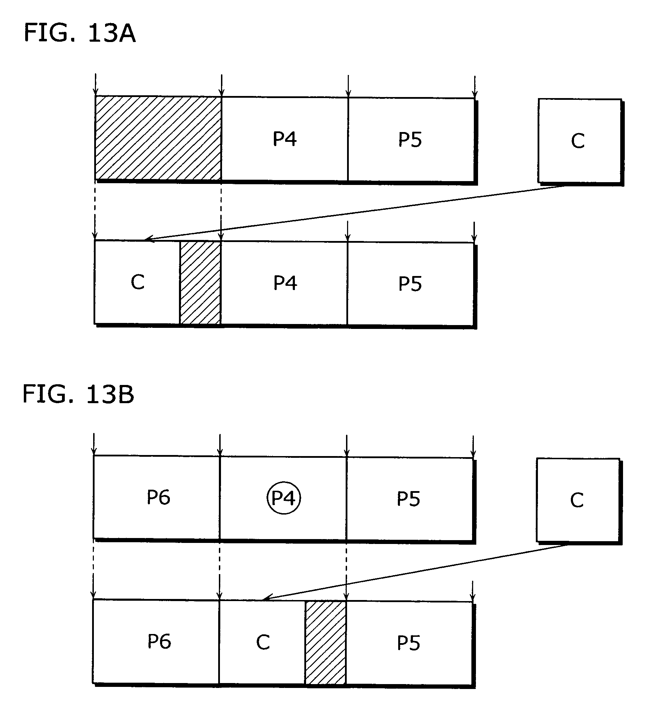

FIG. 13A and FIG. 13B are diagrams showing a situation where the newly decoded picture is accumulated according to the order of the steps S1204-S1210 of the flow chart as shown in FIG. 12. FIG. 13A is an example of the case where the picture memory has enough free area to accumulate the decoded picture C. FIG. 13B is an example of the case where the picture memory does not have enough free area to accumulate the decoded picture C;

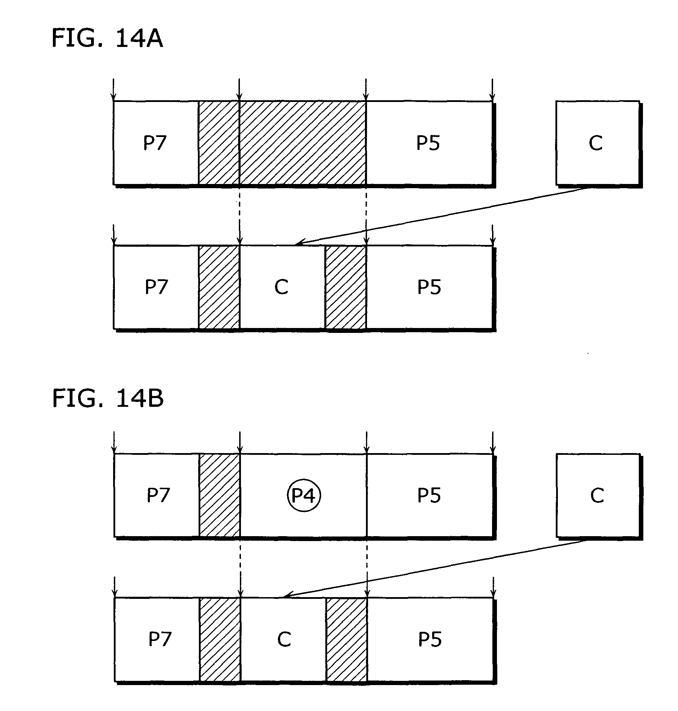

FIG. 14A and FIG. 14B are diagrams showing a situation where the newly decoded picture is accumulated in the picture memory according to the order of the steps S1204-S1213 of the flow chart as shown in FIG. 12. FIG. 14A is an example of the case where the picture memory has enough free area to accumulate the decoded picture C. FIG. 14B is an example of the case where the picture memory does not have enough free area to accumulate the decoded picture C;

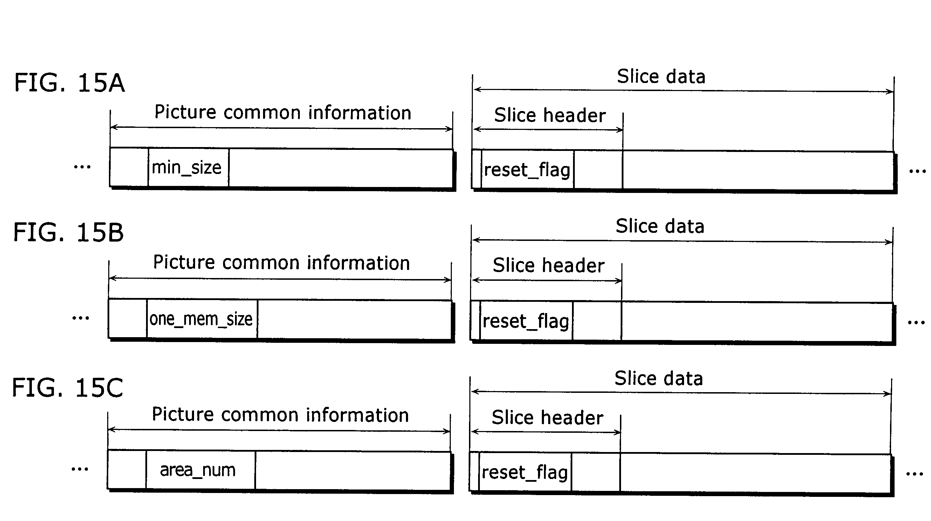

FIG. 15A, FIG. 15B and FIG. 15C are diagrams showing a data structure of a coded stream generated by the picture coding apparatus of the second embodiment. FIG. 15A is a diagram showing an example of the coded stream in the case where the information of the smallest picture size which may be included in the stream is coded. FIG. 15B is a diagram showing an example of the coded stream in the case where the size information of the picture area which is acquired by dividing the picture memory is coded. FIG. 15C is a diagram showing an example of the coded stream in the case where the number of areas in dividing the area is coded;

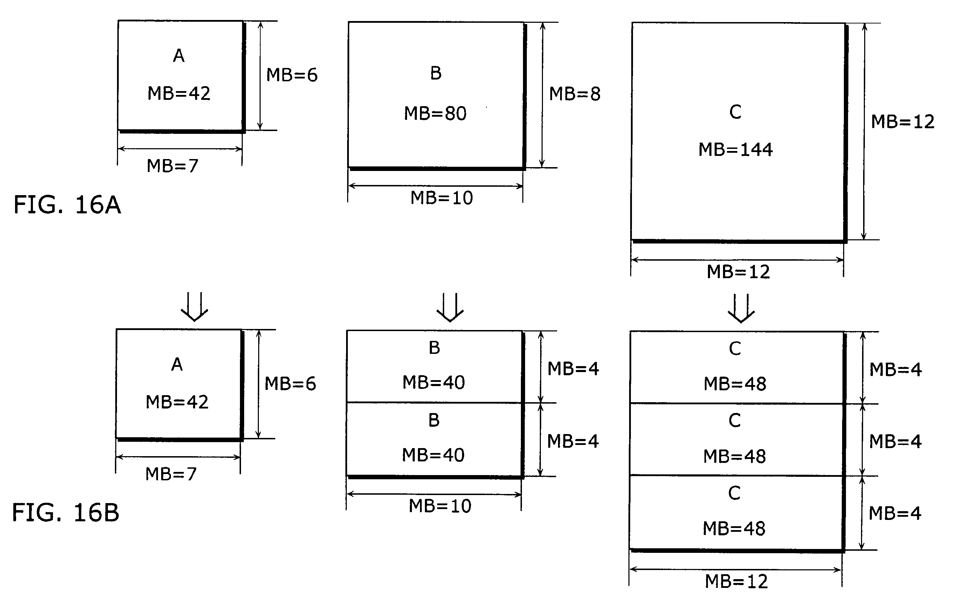

FIG. 16A is a diagram showing an example of three kinds of picture sizes which are coded within one stream. FIG. 16B is a diagram showing an example of dividing method of the picture area for efficiently using the picture memory in the case where the pictures of the three kinds of picture sizes as shown in FIG. 16A are included within one stream;

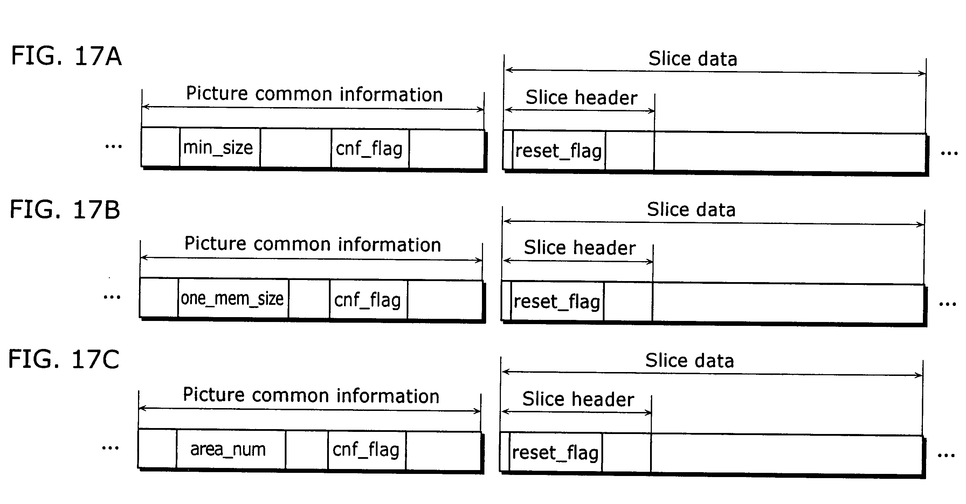

FIG. 17A, FIG. 17B and FIG. 17C are diagrams showing an example of the coded stream in the case where additional information is written in the area of the picture common information of each coded stream as shown in FIG. 15A, FIG. 15B and FIG. 15C;

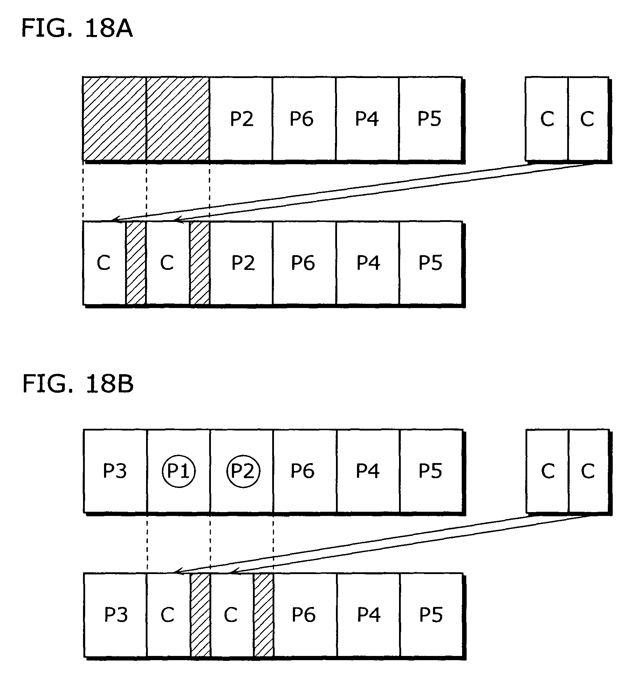

FIG. 18A and FIG. 18B are diagrams showing a situation where the newly decoded pictures are accumulated in the picture memory according to the order of the steps S1204-S1210 of the flow chart of FIG. 12;

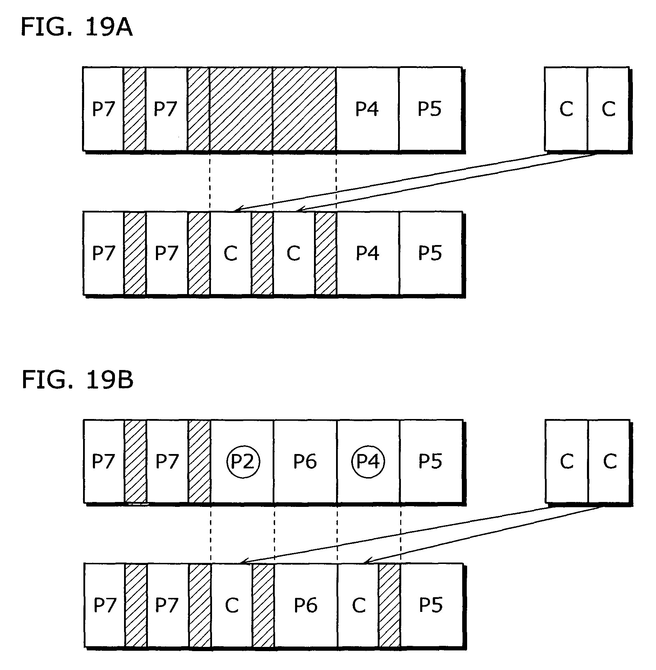

FIG. 19A and FIG. 19B are diagrams showing a situation where the newly decoded pictures are accumulated in the picture memory according to the order of the steps S1204-S1213 of the flow chart of FIG. 12;

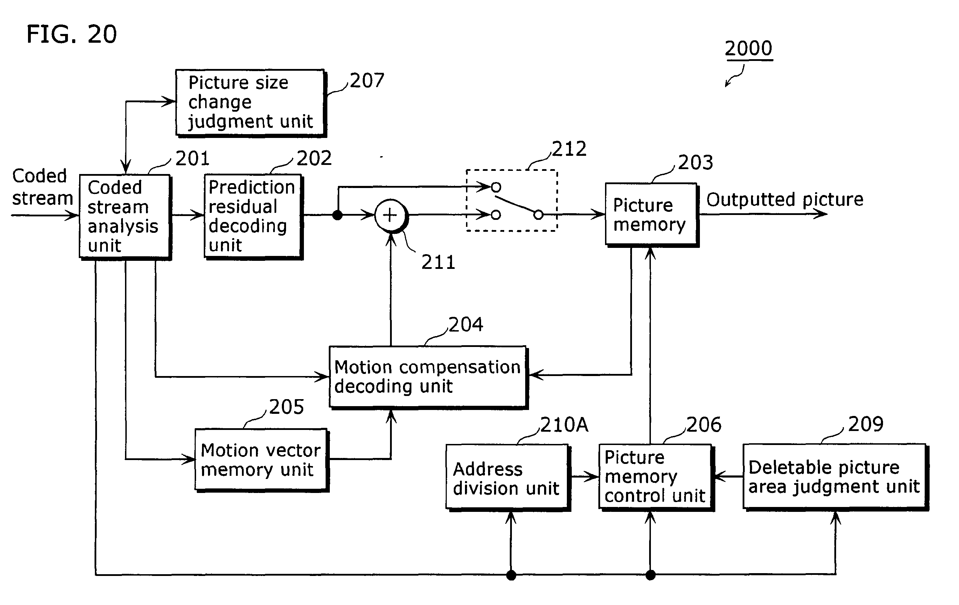

FIG. 20 is a block diagram showing a structure of the picture decoding apparatus according to the third embodiment of the present invention;

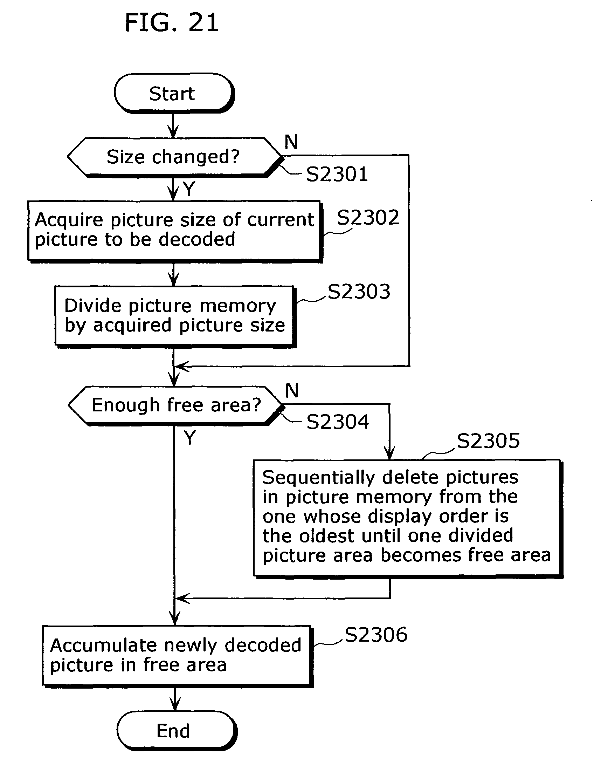

FIG. 21 is a flow chart showing the order of the decoding procedures of the picture decoding apparatus as shown in FIG. 20;

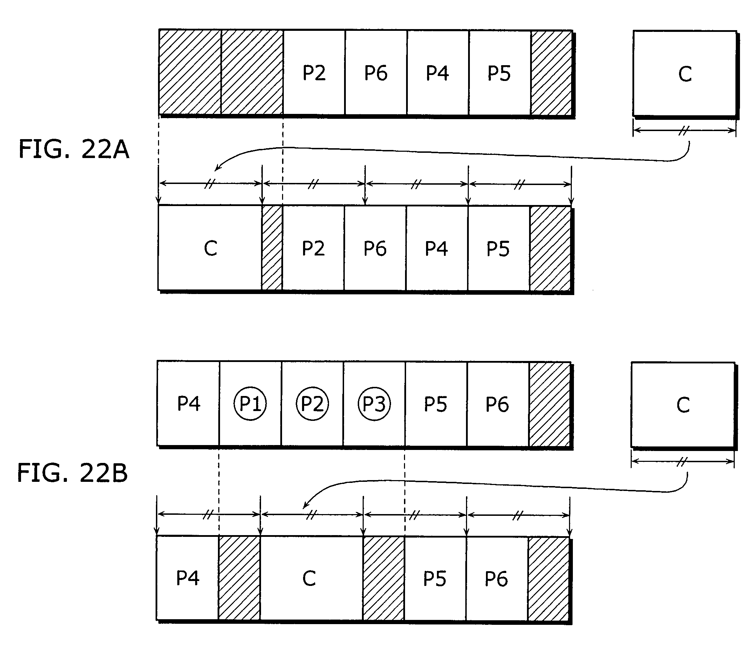

FIG. 22A and FIG. 22B are diagrams showing a situation where the newly decoded picture is accumulated in the picture memory according to the order of the flow chart as shown in FIG. 21;

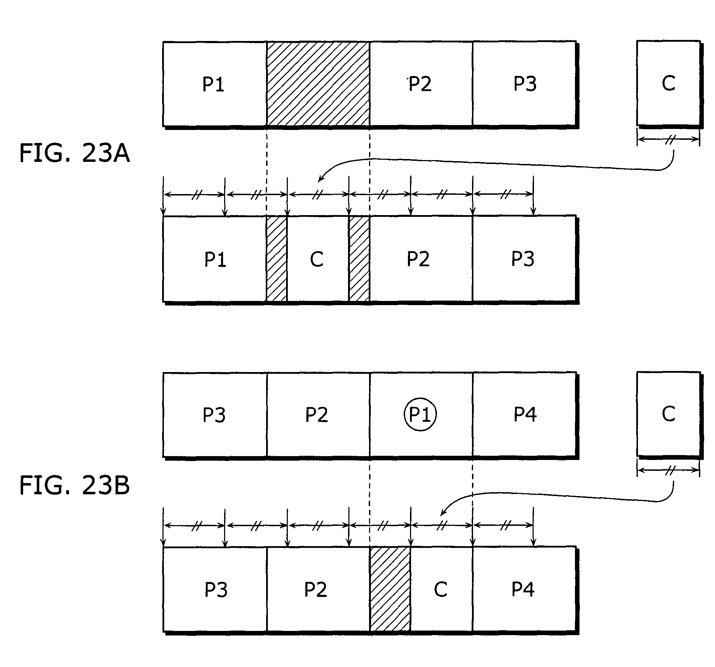

FIG. 23A and FIG. 23B are diagrams showing the situation where the newly decoded picture is accumulated in the picture memory according to the order of the flow chart as shown in FIG. 21;

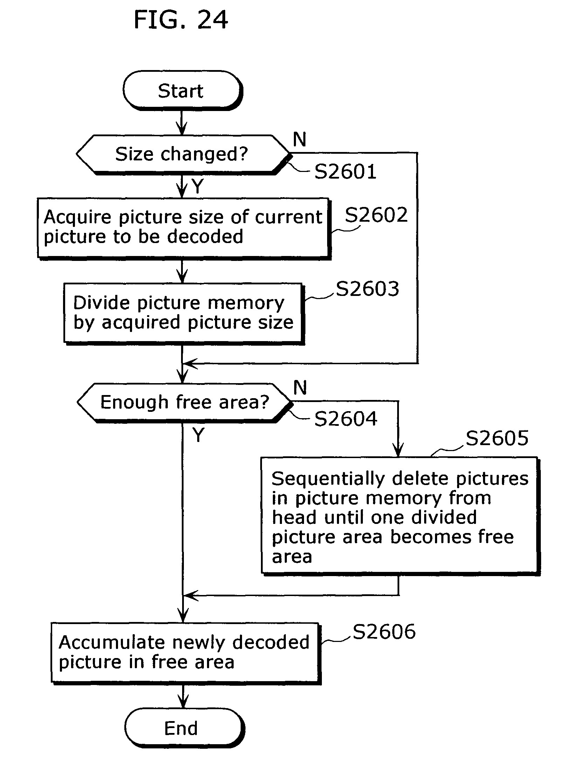

FIG. 24 is a flow chart showing the order of the other decoding procedures of the picture decoding apparatus as shown in FIG. 20;

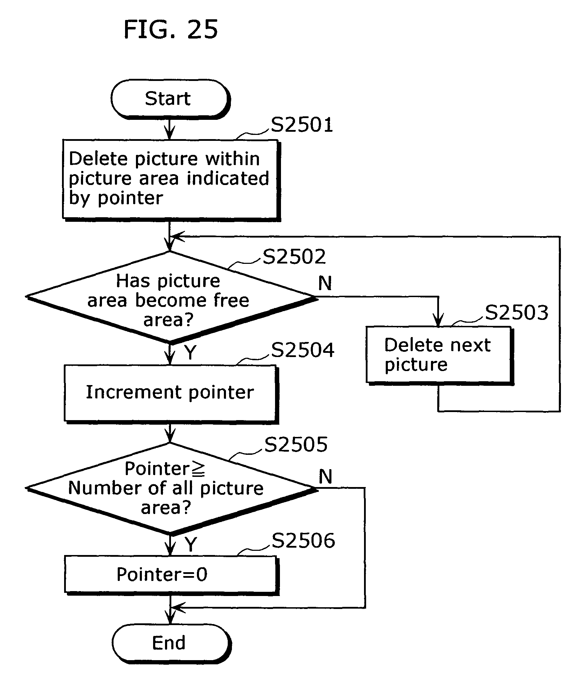

FIG. 25 is a flow chart showing the more specific order of the procedures of the step S2605 as shown in FIG. 24;

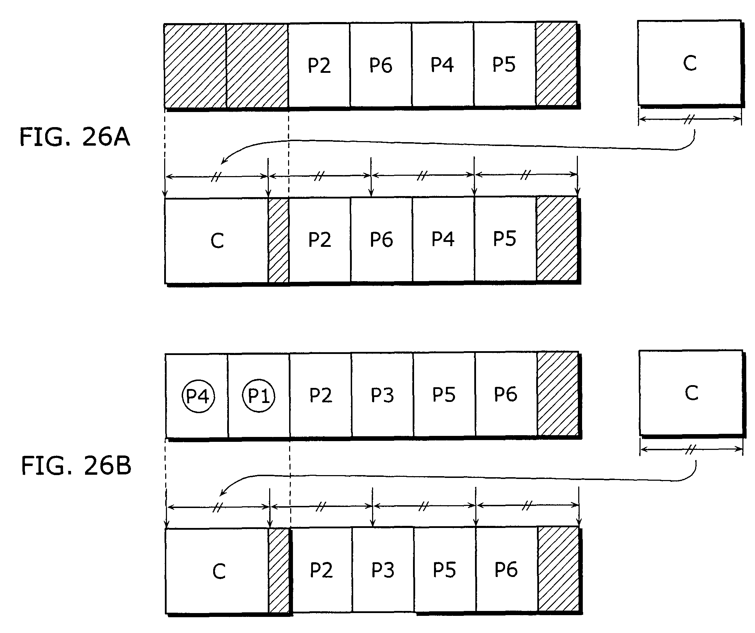

FIG. 26A and FIG. 26B are diagrams showing a situation where the newly decoded picture is accumulated in the picture memory according to the order of the flow chart of FIG. 24 and FIG. 25;

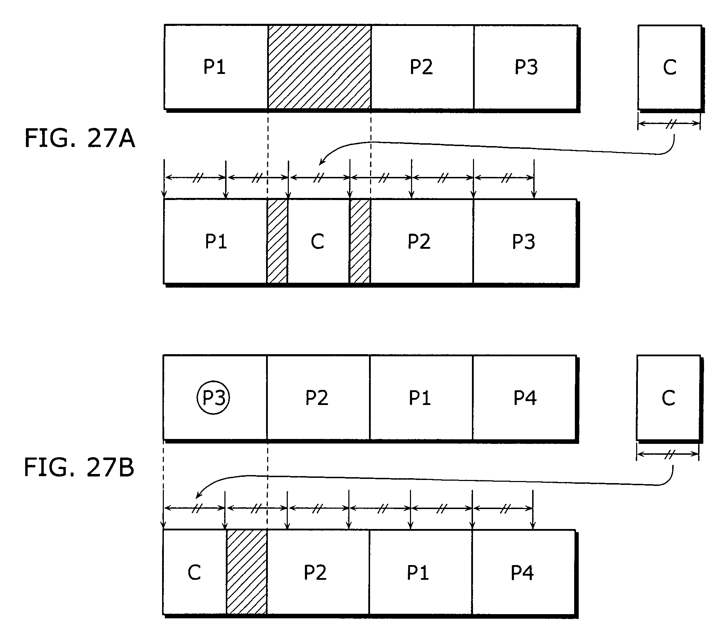

FIG. 27A and FIG. 27B are diagrams showing a situation where the newly decoded picture is accumulated in the picture memory according to the order of the flow chart of FIG. 24 and FIG. 25;

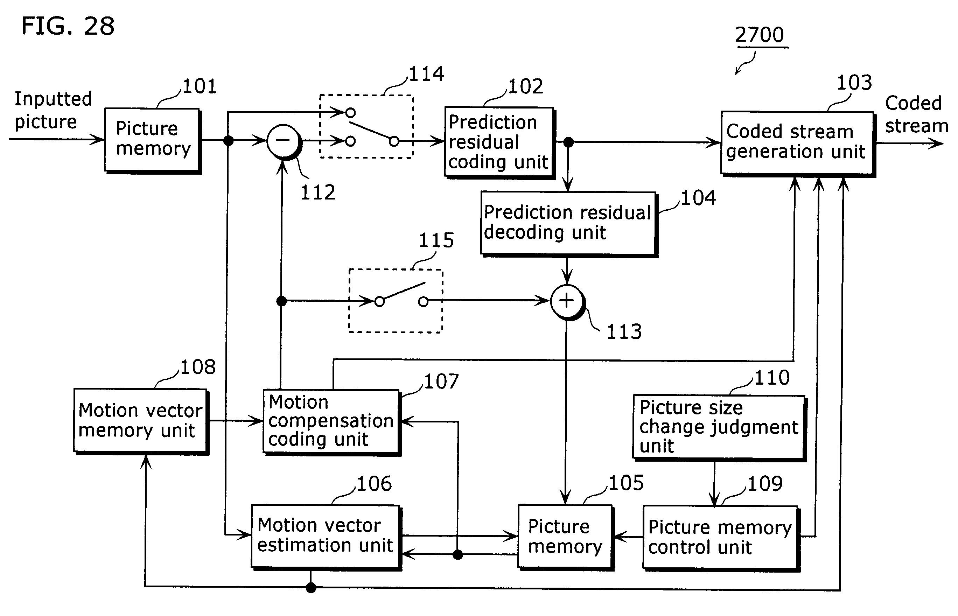

FIG. 28 is a block diagram showing a structure of the picture coding apparatus according to the fourth embodiment;

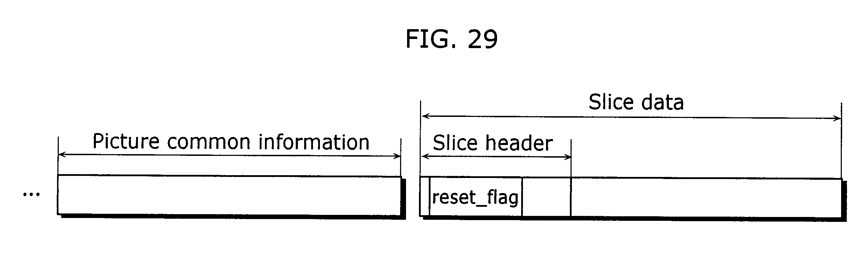

FIG. 29 is a diagram showing a data structure of the coded stream generated by the picture coding apparatus according to the fourth embodiment;

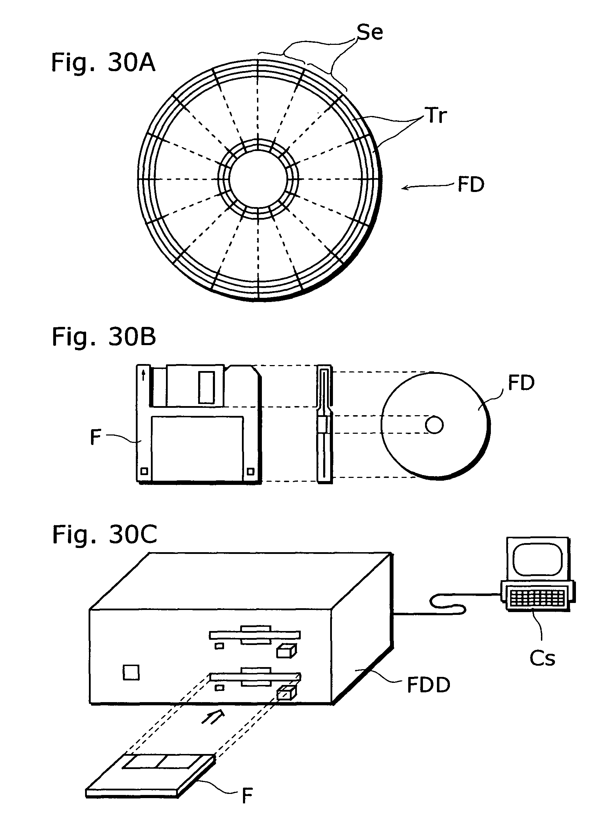

FIG. 30A shows an example of a physical format of a flexible disc which is a record medium itself. FIG. 30B shows the appearance of the flexible disc seen from the front, a section structure, and the flexible disc. FIG. 30C shows a structure for playing the record of such program as described above with the flexible disc FD;

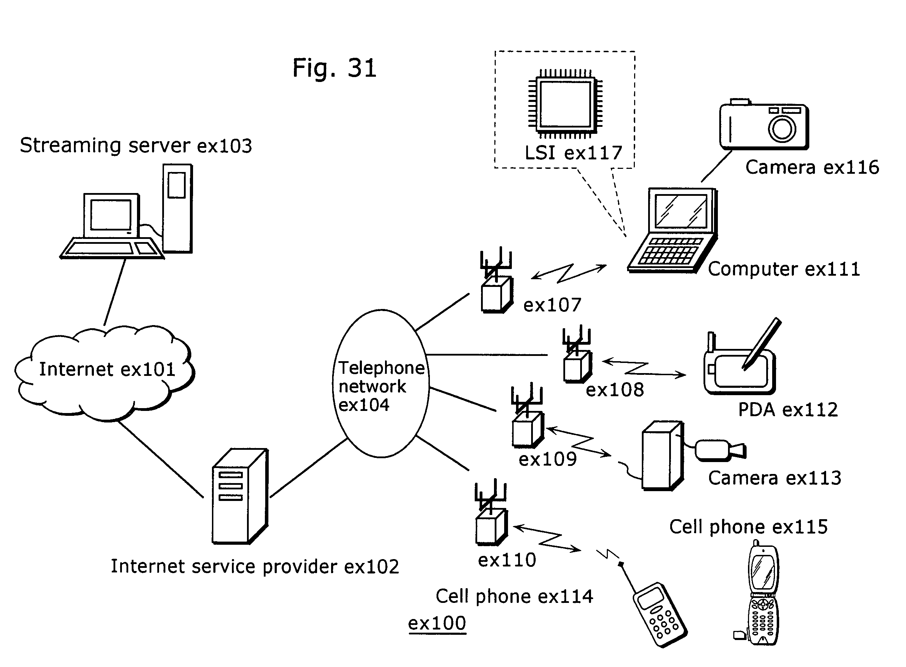

FIG. 31 is a block diagram showing a whole structure of a content supply system ex100 which realizes a content delivery service;

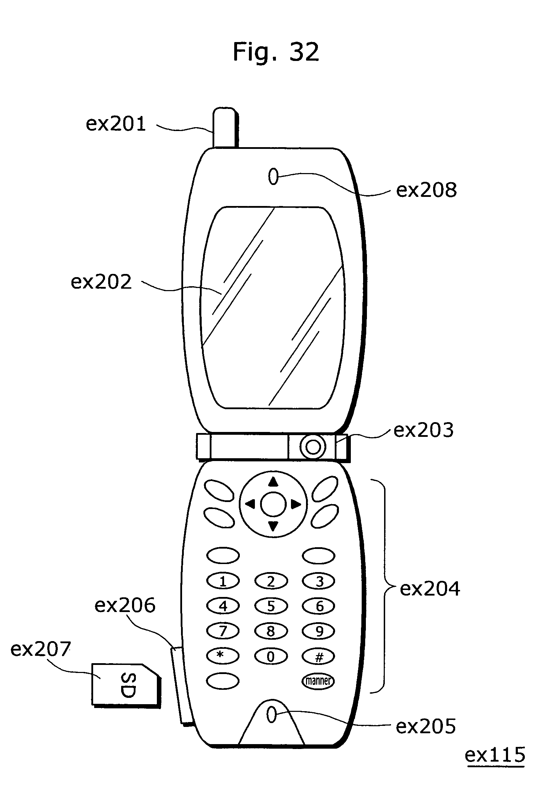

FIG. 32 is a diagram showing a cellular phone ex115 which uses such moving picture coding method and the moving picture decoding method as explained in the embodiments;

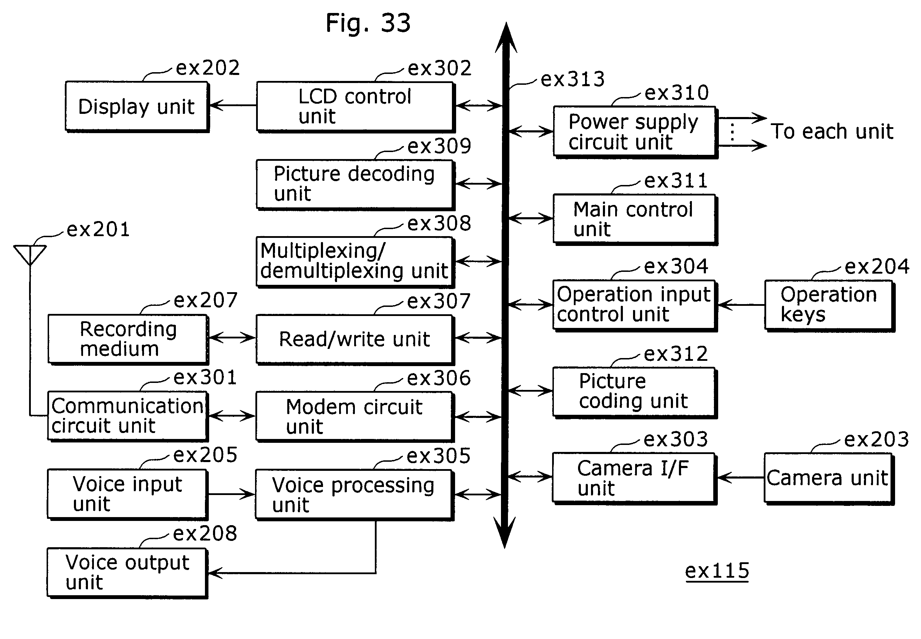

FIG. 33 is a block diagram showing a structure of a cellular phone; and

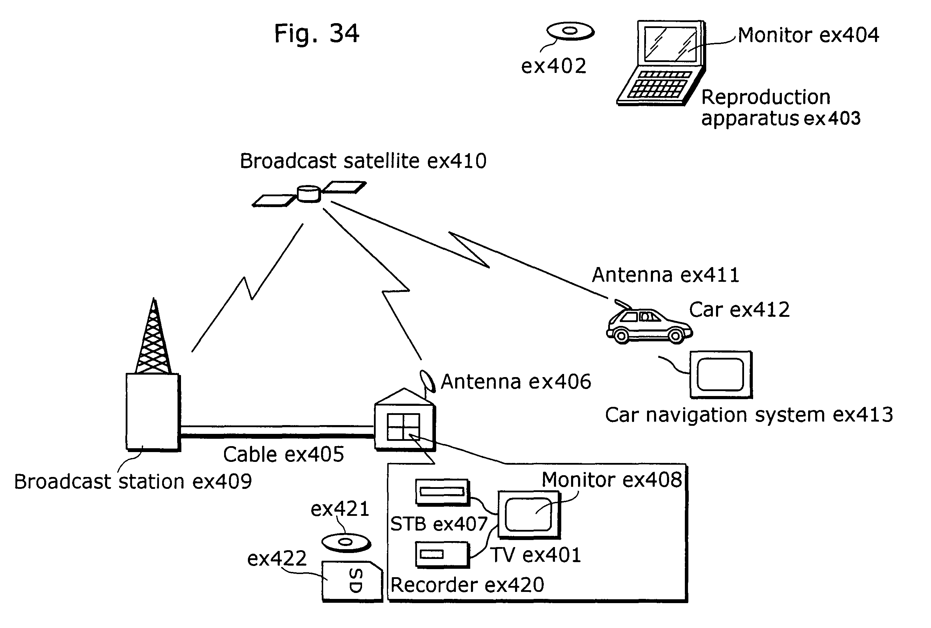

FIG. 34 is a diagram showing an example of a digital broadcasting system.

**Best Mode for Carrying Out the Invention**

The embodiments of the present invention will be explained using FIG. 8-FIG. 34 as following.

(First Embodiment)

Conventionally the picture memory control (holding and deleting a picture in the memory area) when decoding was performed per picture. On the other hand, according to the present embodiment, a memory area of a picture memory when decoding is divided into one or plural areas; and a divided area is a unit for controlling the picture memory. According to the present embodiment, information for specifying a dividing method of the picture memory is generated in the picture coding apparatus, and written in a coded stream. Here, the divided area is called a picture area.

A coding method of a moving picture according to the first embodiment will be explained using a block diagram as shown in FIG. 8. FIG. 8 is a block diagram showing a structure of a picture coding apparatus 800 of the first embodiment. The structure of the picture coding apparatus 800 is similar to that of the conventional picture coding apparatus 100 as explained in FIG. 1. The difference from the conventional picture coding apparatus 100 is that a picture memory dividing information coding unit 801 is newly added. The same procedures as the conventional technology will be omitted here.

Preceding the coding of a stream for coding, the picture memory dividing information coding unit 801 codes the information for specifying the method to divide the picture memory of the decoding side. FIG. 9A and FIG. 9B are diagrams showing a data structure of a coded stream generated by the picture coding apparatus 800. FIG. 9A is a diagram showing an example of a coded stream in the case where the information of the biggest picture size which may be included in the stream is coded. FIG. 9B is a diagram showing an example of a coded stream in the case where the picture memory is divided based on the biggest picture size which may be included in the stream, and the number of the areas that can be stored in the picture memory is coded. According to the first embodiment, as the information for specifying the method to divide the picture memory of the decoding side, the information of the biggest picture size which may be included in the stream is coded; and the coded information is written as max_size of the picture common information area of the coded stream as shown in FIG. 9A. Here, for example, the biggest picture size that the picture coding apparatus 800 can use for coding is used. Otherwise, when a user performs coding, he can select and determine the desirable biggest picture size among the suggested plural picture sizes.

In the case where the picture for coding is capable of changing the picture size of an IDR picture or an equivalent picture thereto, the picture memory control unit 109 inputs a signal showing a reset method of the picture memory into the coded stream generation unit 103. An IDR picture means a picture that has special characteristics as following: (i) a picture which is capable of only intra-picture prediction decoding; (ii) a picture which resets all the pictures in the picture memory after decoding is finished; and (iii) a picture which is capable of changing the picture size. Thus, a picture which is decoded after an IDR picture cannot refer to a picture which is decoded before an IDR picture. For example, P8 as shown in (a) in FIG. 3 can only refer to P7. An IDR picture has reset_flag in the header area of the slice data as shown in FIG. 9A, and the reset_flag specifies the reset method of the picture memory which is one of the characteristics of an IDR picture. Here, a slice means each of the divided areas when a picture is divided into one or plural areas. When reset_flag is 0, all the "reference pictures" in the picture memory are changed to "non-reference pictures" ("display-waiting pictures"). On the other hand, when reset flag is 1, regardless of "reference pictures" or "non-reference pictures", the data of all the pictures is deleted from the picture memory. In other words, when reset_flag is 1, even if there are pictures that are decoded before an IDR picture and not displayed yet, the pictures after an IDR picture are displayed without displaying such pictures as described above. According to the first embodiment, the reset method of the picture memory is arbitrarily specified. For example, in the operation of the picture memory of the decoding side, depending on whether or not there are pictures that are not displayed in the picture memory, "reset_flag is set 0", that is, all the pictures are made "non-reference pictures"; and the picture data itself is not deleted. Otherwise, it is possible to arbitrarily select either of the two: (a) "reset_flag is set 0" or (b) "reset_flag is set 1", that is, all the picture data itself is deleted; and all the area of the picture memory is made empty. The coded stream generation unit 103 codes the inputted signal, and generates a coded stream which has reset_flag in the slice header as shown in FIG. 9A.

Also, instead of writing the information of the biggest picture size which may be included in the stream, it is possible to write the number of the areas that can be retained in the picture memory when decoding as min_area_num in the picture common information area of the coded stream, as shown in FIG. 9B. min_area_num indicates the number of the picture areas that are made when dividing the picture memory on the decoding side so that the size of one picture area becomes max_size that is the biggest picture size that may be included in the stream. In such case as described above, the value of min_area_num is determined by the equation1 as shown below. Here, the calculation result of the division in the equation is calculated as an integer number by round down method.

$$(\text{min\_area\_num}) = (\text{the picture memory size on the decoding}$$

$$\text{side}) / (\text{max\_size}) \qquad\qquad (\text{Equation 1})$$

Also, it is possible to treat the picture size and picture memory size in the same manner, no matter which of the followings they may be: the whole number of pixels, the whole number of macroblocks and the whole number of bits.

Also, in inter-picture prediction coding, by performing the coding with such number of the "reference pictures" as is always lower than min_area_num which is calculated by the equation 1 as shown above, regardless of the picture size of the pictures for coding, even if the divided picture memory is used by the dividing method as described above on the decoding side, it is possible to prevent the situation where the reference pictures do not exist in the picture memory from happening.

FIG. 10A and FIG. 10B are diagrams showing an example of the coded stream in the case where additional information is written in the area of the picture common information within the coded stream as shown in FIG. 9A and FIG. 9B. Also, it is possible to write cnf_flag, in addition to max_size and min_area_num, in the picture common information area of the coded stream as shown in FIG. 10A and FIG. 10B. Even in the case where the picture memory on the decoding side is divided and controlled, according to max_size and min_area_num, cnf_flag indicates whether or not all the pictures included in the stream can be displayed without any problems. For example, in the case where the value of cnf_flag is 1, it indicates that all the pictures in the stream can be displayed without any problems. In the case where the value of cnf_flag is 0, it indicates the possibility that the pictures that are not displayed yet may not be displayed because the data is already lost, due to the procedures of the first embodiment. Thus, by writing cnf_flag in the coded stream and checking the value of this signal, it is possible to judge whether or not the procedures of the first embodiment should be applied. For example, if cnf_flag is 0, it should be noted that there is a possibility that some pictures may not be displayed if the procedures of the first embodiment are applied. Therefore, by switching to the conventional method of controlling the picture memory per picture, with the possibility that the memory area may be fragmented, all the pictures can be displayed without any problems.

Although in FIG. 9A, FIG. 9B, FIG. 10A and FIG. 10B, max_size, min_area_num and cnf_flag are written in the picture common information area, it is also possible to write max_size, min_area_num and cnf_flag in the datan area where the data that is not essential, but supports the decoding procedures is collected. Also, it is possible to write max_size, min_area_num and cnf_flag in the sequence common information area that can be referred to by all the sequences. Moreover, it is possible to write max_size, min_area_num and cnf_flag in the slice header.

Next, the decoding method of the coded stream which is coded by such coding method as described above will be explained using FIG. 11-FIG. 14. FIG. 11 is a block diagram showing a structure of the picture decoding apparatus 1100 of the first embodiment. FIG. 12 is a flow chart showing the order of the decoding procedures in the picture decoding apparatus 1100 as shown in FIG. 11. FIG. 13A, FIG. 13B, FIG. 14A and FIG. 14B are schematic diagrams showing the management method of the picture memory 203 as shown in FIG. 11.

The structure of the picture decoding apparatus 1100 as shown in FIG. 11 is similar to that of the conventional picture decoding apparatus 200 as shown in FIG. 2. The difference from the conventional method is that the picture size change judgment unit 207, the deletable picture area judgment unit 209 and the picture memory dividing method specification unit 210 are added. The same procedures as the conventional technology will be omitted here.

Unlike the conventional technology, in the first embodiment, the picture memory 203 is not controlled per picture; however, the picture area that is made by dividing the picture memory 203 into one or plural areas is used as a unit for holding and deleting a picture. Preceding the decoding of the coded stream, the picture memory dividing method specification unit 210 analyzes the dividing method of the picture memory from a signal of the coded stream, and directs the picture memory control unit 206. According to the first embodiment, as the information for specifying the dividing method of the picture memory, the information of the biggest picture size that may be included in the stream is written in the picture common information area as max_size that is included in the stream of FIG. 9A. The picture memory dividing method specification unit 210 analyzes the signal, and determines the dividing method of the picture memory 203. The number of the areas divided is calculated by the equation 2 as shown below. Also, the calculation result of the division in the equation is calculated as an integer number by the round down procedure.

$$\text{(The number of the picture areas)} = \text{(The size of the picture memory 203 of the picture decoding apparatus 1100)} / \text{(max\_size)} \qquad \text{(Equation 2)}$$

Also, in the case where the coded stream of FIG. 9B is used in stead of the coded stream of FIG. 9A, the number of the picture areas is calculated by the equation 3 as shown below.

$$\text{(The number of the picture areas)} = \text{(min\_area\_num)} \qquad \text{(Equation 3)}$$

Here, the picture size and the picture memory size as described above can be treated in the same manner, no matter which of the three they may be: the whole number of pixels, the whole number of macroblocks and the whole number of bits.

The picture size change judgment unit 207 compares the picture size of the picture to be decoded and the picture size of the previously (or just) coded picture, and judges whether or not the picture size has been changed.

reset_flag is coded in the slice header of the coded stream, as shown in FIG. 9A and FIG. 9B. The coded stream analysis unit 201 analyzes the value of the reset_flag, and outputs the information of the analysis result to the picture memory control unit 206. According to the first embodiment, even if the picture size was changed, there is a possibility that the value of reset_flag is selected as either 0 or 1. Thus, according to the value of reset_flag, the management method of the picture memory is divided as shown in the flow chart of FIG. 12. In particular, in the case where reset_flag is 0, there is a possibility that the picture before the change of the picture size remains in the picture memory; therefore, it is necessary to judge which picture area should be deleted in order to accumulate the picture after the change of the picture size. The deletable picture area judgment unit 209 makes such judgment as described above; and the judging result is outputted to the picture memory control unit 206. Consequently, the picture memory is managed.

Next, the specific operations of the picture memory control unit 206, the picture size change judgment unit 207 and the deletable picture area judgment unit 209 in the decoding procedure will be explained using the flow chart of FIG. 12. Although in the flow chart in FIG. 12, the change of the picture size and the value of reset_flag are judged after the current picture is decoded, such order is arbitrary and not limited to the order as shown in FIG. 12.

First, the flow of the decoding procedure will be explained in the case where the picture size of the picture to be decoded is changed (S1204) and reset_flag is 1 (S1205). The value of reset_flag as 1 indicates that all the picture data in the picture memory is deleted and all the area is emptied. In other words, if such signal as described above is inputted into the picture memory control unit 206, it is possible that the picture memory control unit 206 deletes all the areas of the picture memory (S1206), the decoded picture after the change of the picture size is saved in the arbitrary area in the picture memory (S1207).

Next, the flow of the decoding procedure will be explained in the case where the picture size of the picture to be decoded is changed (S1204), and reset_flag is 0 (S1205). The value of reset_flag as 0 indicates that all the picture data in the picture memory is made "non-reference" pictures, but the picture data itself is not deleted and left accumulated. The deletable picture area judgment unit 209 checks the free area of the picture memory, and judges the picture area(s) to be deleted in the case where there is not enough free area (S1208). The pictures that are accumulated in the picture memory 203 have the display order information, in addition to the picture data. The deletable picture area judgment unit 209 checks the display order information. Then, the deletable picture area judgment unit 209 specifies the picture area where the picture that has the oldest display order information is accumulated, and transmits the direction to delete the specified picture area to the picture memory control unit 206. Consequently, the specified picture area is deleted, and the decoded picture is accumulated in the generated free area (S1210).

FIG. 13A and FIG. 13B are diagrams showing a situation where the newly decoded picture is accumulated in the picture memory 203, following the order of the steps S1204-S1210 of the flow chart as shown in FIG. 12.

FIG. 13A is an example of the case where there is enough free area to accumulate the decoded picture C in the picture memory 203. In such example as described above, P4 and P5 of the picture stream in (a) and (b) in FIG. 3 are accumulated in the picture memory, and P7 is decoded at present (that is, C=P7). P4 and P5 are the pictures that have the same picture size as the divided picture area; thus, it should be noted that P4 and P5 have the biggest picture size among the pictures included in the sequence. On the other hand, the decoded picture C always has the picture size that is the same as or smaller than the picture area. The example of FIG. 13A indicates the case where the picture size of the picture C for decoding is smaller than P4 and P5. In such case as described above, it is possible to accumulate the decoded picture C in the free area as it is as shown in the bottom part of FIG. 13A. In other words, the picture area where the picture data is already accumulated is not deleted.

The head part of FIG. 13B is an example of the case where there is not enough free area to accumulate the decoded picture C in the picture memory. In such example as described above, P6, P4 and P5 of the picture stream as shown in FIG. 3 are accumulated in the picture memory, and P7 is decoded at present (that is, C=P7). In such case as described above, it is necessary to delete the picture area that has the picture data before the change of the picture size and is accumulated in the picture memory 203, and to retain an area for accumulating the decoded picture C. According to the first embodiment, the picture to be decoded always has the picture size that is the same as or smaller than the picture area. Thus, in the case where the picture memory 203 does not have a free area, the area for accumulating the decoded picture can be retained by deleting one of the picture areas. The picture area where the accumulated picture has the oldest display order information is selected as the picture area to be deleted. In such example as described above, it should be noted that the display order information of P4 is the oldest. The deletable picture area judgment unit 209 judges the picture area to be deleted by such procedures as described above. Then, the deletable picture area judgment unit 209 outputs the judging result to the picture memory control unit 206, and deletes the picture area. In the example of the head part of FIG. 13B, P4 is deleted by such procedures as described above; and the decoded picture C as shown in the bottom part of FIG. 13B is accumulated in the free area which is generated by deleting P4.

Finally, the flow of the decoding procedure will be explained in the case where the picture size of the picture to be decoded is not changed when decoding, but is already changed, or in the case where the picture size of the picture is not changed at all (S1204). Unlike the conventional technology, according to the first embodiment, regardless of the existence of the picture whose size is different from the picture C for decoding in the picture memory 203, it is possible to manage the picture memory 203 by the same procedure as described above. The deletable picture area judgment unit 209 checks the free area of the picture memory 203, and judges the picture area to be deleted in the case where there is not enough free area. The pictures that are accumulated in the picture memory 203 have the display order information, in addition to the picture data. The deletable picture area judgment unit 209 checks the display order information. Then, the deletable picture area judgment unit 209 specifies the picture area where the picture whose display order information is the oldest is accumulated, and transmits the direction to delete the specified picture area to the picture memory control unit 206. As a result, the deletable picture area judgment unit 209 accumulates the decoded picture in the generated free area.

FIG. 14A and FIG. 14B are diagrams showing a situation where the newly decoded picture is accumulated in the picture memory 203 following the steps S1204-S1213 of the flow chart as shown in FIG. 12.

FIG. 14A is an example of the case where the picture memory has enough free area to accumulate the decoded picture C. Such example as described above shows the situation where P5 and P7 of the picture stream are accumulated in the picture memory and P8 is decoded (that is, C=P8) at present. P5 has the same picture size as the picture area. Thus, it should be noted that P5 has the biggest picture size among the pictures included in the sequence. On the other hand, the decoded picture C always has the same picture size as or smaller picture size than the picture area. The example of FIG. 14A shows the case where the picture C has a smaller picture size than P5. In such case as described above, as shown in the bottom part of FIG. 14A, it is possible to accumulate the decoded picture C as it is in the free area. However, in such case as described above, the picture C for decoding is not accumulated from the head of the free area; but, the picture C is accumulated from the head of the picture area that is a free area. And, the picture area that has the picture data that is already accumulated in the picture memory is not deleted.

The head part of FIG. 14B is an example of the case where the picture memory 203 does not have enough free area to accumulate the decoded picture C. In such example as described above, P4, P5 and P7 of the picture stream as shown in FIG. 3 are accumulated in the picture memory, and P8 is decoded (that is, C=P8) at present. In such case as described above, it is necessary to delete the picture area that has the picture data accumulated in the picture memory 203 and to retain an area to accumulate the newly decoded picture C. According to the first embodiment, the picture to be decoded always has the picture size that is the same as or smaller than the picture area that is an area made by dividing the picture memory. Thus, in the case where the picture memory does not have enough free area, the area for accumulating the decoded picture can be retained by deleting one of the picture areas. The picture area where the picture which has the oldest display order information is accumulated is selected as the picture area to be deleted. In such example as described above, it is noticeable that the display order information of P4 is the oldest. The deletable picture area judgment unit 209 judges the picture area to be deleted by such procedures as described above. Then, the deletable picture area judgment unit 209 outputs the judging result to the picture memory control unit 206, and deletes the picture. In the example of the head part of FIG. 14B, P4 is deleted by such procedures as described above, and the decoded picture C is accumulated in the generated free area as shown in the bottom part of FIG. 14B.

Although in the first embodiment as described above, when deleting the picture area from the picture memory 203 for decoding, the picture area is sequentially deleted from the one whose accumulated picture has the oldest display order information, it is possible to perform the same procedures in the case of deleting the picture whose order to have been decoded is the oldest, in stead of the display order information.

As recognized from such explanations as described above, according to the first embodiment, it is not necessary to distinguish the following two cases (a) and (b) because the picture memory 203 can be managed by the same procedures: (a) the case where the picture size of the picture C for decoding is changed, and (b) the case where the picture size of the picture C for decoding is not changed. In other words, in both cases where the picture size is changed or not changed when coding, by the simple procedure that always deletes the picture area by one area, leaving as many pictures that may not be displayed as possible in the picture memory, the picture memory can be managed without any contradictions. Also, on the coding apparatus side, in addition to the conventional method, it is possible to perform the procedures of the first embodiment only by coding the information of the biggest picture size included in the stream and writing the coded information in the coded stream, thus the picture coding apparatus is easily implemented. However, as happened in the examples of FIG. 13A, FIG. 13B, FIG. 14A and FIG. 14B, in the case where the newly decoded picture (the backward picture from the picture C for decoding) has a small picture size, a useless area occurs in each picture area, the picture memory is not efficiently utilized. However, as it is possible to sequentially accumulate a picture of any picture size, without being physically divided, on the picture memory, simplifying the access to the picture memory, thereby it is possible to perform decoding without lowering the speed. Also, in the regular picture coding and decoding, even if the picture size is changed, the structure that performs coding and decoding without changing the reference relations of the pictures (for example, the number of the pictures to use for reference) is often used. Consequently, according to such method as explained in the first embodiment, it is possible to perform decoding by the efficient procedures.

(Second Embodiment)

According to the first embodiment, based on the information of the biggest picture size that may be included in the stream, the picture memory 203 on the decoding side is divided; and with the picture area as a unit, the picture memory 203 is managed. On the other hand, according to the second embodiment, based on the information of the smallest picture size that may be included in the stream, the picture memory 203 is managed.

The coding method of a moving picture according to the second embodiment will be explained using a block diagram as shown in FIG. 8. The structure of the picture coding apparatus is similar to that of the picture coding apparatus 800 as explained in the first embodiment. Here, the explanation of the same structure elements as the ones already explained will be omitted.

Preceding the coding of the stream for coding, the picture memory dividing information coding unit 801 codes the information to specify the method to divide the picture memory on the decoding side. According to the second embodiment, as the information to specify the method to divide the picture memory 203 on the decoding side, the information of the smallest picture size that may be included in the stream is coded. FIG. 15 is a diagram showing a data structure of a coded stream generated by the picture coding apparatus 800 of the second embodiment. FIG. 15A is a diagram showing an example of a coded stream in the case where the information of the smallest picture size that may be included in the stream is coded. The picture memory dividing information coding unit 801 writes the information of the smallest picture size that may be included in the stream as min_size of the picture common information area of the coded stream as shown in FIG. 15A. Here, as the smallest picture size, for example, the smallest picture size which the picture coding apparatus can use for coding can be used; otherwise, a user can select and determine one of the suggested plural picture sizes when performing the coding.

In the case where the picture for coding is a picture capable of changing the size of an IDR picture or an equivalent picture thereto, as well as the conventional technology, the picture memory control unit 109 inputs a signal indicating the reset method of the picture memory into the coded stream generation unit 103. According to the present embodiment, the reset method of the picture memory specified in such case as described above is arbitrary. For example, in the case of the operation of the picture memory on the decoding side, depending on the existence of the picture that is not displayed in the picture memory, "reset_flag is set 0", that is, all the pictures are made "non-reference pictures"; and the picture data itself is not deleted. Otherwise, it is possible to arbitrarily select either of the two: (a) "reset_flag is set 0"; or (b) "reset_flag is set 1", that is, that the data itself of all the pictures is deleted and all the area of the picture memory is emptied. The coded stream generation unit 103 codes the inputted signal, and generates the coded stream that has reset_flag in the slice header as shown in FIG. 15A.

Also, in stead of writing the smallest picture size, as min_size, that may be included in the stream, there is a method to directly write the size of each of the divided picture areas, as one_mem_size, after dividing the picture memory 203 for decoding. FIG. 15B is a diagram showing an example of a coded stream in the case where the information of the size of the picture area that can be acquired by dividing the picture memory 203 is coded. For example, as FIG. 15B shows, it is possible to write the size of the divided picture area directly as one_mem_size in the picture common information. As such one_mem_size, for example, (i) the smallest picture size included in the stream can be used as it is, (ii) the greatest common divisor of all the picture sizes included in the stream can be used, and (iii) the size of a group of areas where the most efficient access is possible in the operation of the picture memory on the decoding side can be used.

When determining one_mem_size, in order to accumulate one macroblock in the same area, or in order to accumulate all the macroblocks of one horizontal stream of a picture in the same area, it is possible to efficiently manage the picture memory by rounding up the value of one_mem_size. Also, such round-up as described above can be done on the picture decoding apparatus side. For example, there is a case where the pictures of three kinds of picture sizes are coded in one stream as shown in FIG. 16A. FIG. 16A is a diagram showing an example of three kinds of picture sizes that are coded in one stream. In FIG. 16A the size of each picture is expressed as to how many macroblocks (for example, $16 \times 16$ pixels) the vertical and horizontal lengths correspond to. In FIG. 16A the picture A is formed with such macroblocks as vertical 6 and horizontal 7; the picture B is formed with such macroblocks as vertical 8 and horizontal 10; and the picture C is formed with such macroblocks as vertical 12 and horizontal 12. FIG. 16B is a diagram showing an example of the method to divide the picture area to efficiently use the picture memory 203 in the case where one stream has the pictures of three sizes as shown in FIG. 16A. In such case as described above, if the size of the area where the data of 48 macroblocks can be accumulated is written as one_mem_size, as FIG. 16B shows, it is possible to accumulate the data of one picture as following: the picture A in one picture area; the picture B in two picture areas; and the picture C in three picture areas. Here, it is noticeable that the macroblocks of one horizontal stream in each picture are distributed to one picture area without being intercepted in the middle. Although all the pictures are equally divided in the example of FIG. 16B, it is possible to treat the unequally divided pictures without any problems.

Also, in stead of writing the size information of one picture area which is made by dividing the picture memory on the decoding side, as one_mem_size, it is possible to write the number of the divided picture areas as area_num in the picture common information area of the coded stream. FIG. 15C is a diagram showing an example of a coded stream in the case where the number of the picture areas that can be acquired by dividing the picture memory 203 is coded. For example, as FIG. 15C shows, the number of the divided picture areas can be directly written, as area_num, in the picture common information. In such case as described above, the size of the picture memory of the picture decoding apparatus is uniform according to the standard, the value of area_num is easily determined by the equation 4 as shown below. Here, the calculation result of the division in the equation is calculated as an integer number by the round-down procedure.

$$(\text{area\_num}) = (\text{the size of the picture memory of the picture}$$

$$\text{decoding apparatus 1100}) / (\text{one\_mem\_size}) \qquad \text{(Equation 4)}$$

Also, it is possible to treat such picture size and picture memory size as described above in the same manner, no matter which of the followings they may be: the whole number of pixels, the whole number of macroblocks, and the whole number of bits.

FIG. 17A, FIG. 17B and FIG. 17C are diagrams showing an example of a coded stream in the case where additional information is written in the area of the picture common information of each coded stream as shown in FIG. 15A, FIG. 15B and FIG. 15C. Also, each coded stream as shown in FIG. 15A, FIG. 15B and FIG. 15C can be written as shown in FIG. 17A, FIG. 17B and FIG. 17C. In other words, in addition to min_size, one_mem_size and area_num, cnf_flag can be written in the picture common information area of the coded stream. cnf_flag indicates whether or not all the pictures included in the stream can be displayed without any problems, even in the case where the picture memory on the decoding side is divided and controlled according to min_size, one_mem_size and area_num. For example, in the case where the value of cnf_flag is 1, it indicates that all the pictures in the stream can be displayed without any problems. In the case where the value of cnf_flag is 0, it indicates the possibility that the pictures that are not displayed yet may not be displayed because the data is already lost, due to the procedures of the second embodiment.

Although in FIG. 15A, FIG. 15B and FIG. 15C and FIG. 17A, FIG. 17B and FIG. 17C min_size, one_mem_size, area_num and cnf_flag are written in the picture common information area, it is also possible to write min_size, one_mem_size, area_num and cnf_flag in the data area where the data that is not essential, but supports the decoding procedures is collected. Also, it is possible to write min_size, one_mem_size, area_num and cnf_flag in the sequence common information area that can be referred to by all the sequences. Moreover, it is possible to write min_size, one_mem_size, area_num and cnf_flag in the slice header.

Next, the decoding method of the coded stream coded by such coding method as described above will be explained by using a block diagram of the picture decoding apparatus 1100 as shown in FIG. 11, a flow chart of the decoding procedure as shown in FIG. 12, and a schematic diagram of the picture memory as shown in FIG. 18A, FIG. 18B, FIG. 19A and FIG. 19B.

As well as the first embodiment, according to the second embodiment, the picture memory is not managed per picture; however, the so-called picture area that is made by dividing the picture memory into one or plural areas is used as a unit for holding and deleting a picture. Preceding the decoding of the coded stream, the picture memory dividing method specification unit 210 analyzes the dividing method of the picture memory from a signal of the coded stream, and directs the picture memory control unit 206. According to the second embodiment, as the information for specifying the dividing method of the picture memory, the information of the smallest picture size that may be included in the stream is written in the picture common information area as min_size that is included in the stream of FIG. 15A. The picture memory dividing method specification unit 210 analyzes the signal, and determines the dividing method of the picture memory. The number of the areas divided is calculated by the equation 5 as shown below. Also, the calculation result of the division in the equation is calculated as an integer number by the round down procedure.

$$(\text{The number of the picture areas}) = (\text{The size of the picture}$$

$$\text{memory of the picture decoding apparatus 1100}) / (\text{min\_size}) \qquad \text{(Equation 5)}$$

Also, in the case where the coded stream of FIG. 15B is used in stead of the coded stream of FIG. 15A, the number of the picture areas is calculated by the equation 6 as shown below.

**EP 1 601 206 A1**

(The number of the picture areas)=(The size of the picture memory of the picture decoding apparatus 1100) / (one_mem_size)          (Equation 6)

Also, in the case where the coded stream of FIG. 15C is used, in stead of the coded stream of FIG. 15A, the number of the picture areas can be calculated by the equation 7 as shown below.

(The number of the picture areas) = (area_num)          (Equation 7)

Here, the picture size and the picture memory size as described above can be treated in the same manner, no matter which of the three they may be: the whole number of pixels, the whole number of macroblocks and the whole number of bits.

The picture size change judgment unit 207 compares the picture size of the picture to be decoded and the picture size of the previously (or just) coded picture, and judges whether or not the picture size has been changed.

reset_flag is coded in the slice header of the coded stream, as shown in FIG. 15A, FIG. 15B and FIG. 15C. The coded stream analysis unit 201 analyzes the value of the reset_flag, and outputs the information of the analysis result to the picture memory control unit 206. According to the second embodiment, even if the picture size was changed, there is a possibility that the value of reset_flag is selected as either 0 or 1. Thus, according to the value of reset_flag, the management method of the picture memory is divided as shown in the flow chart of FIG. 12. In particular, in the case where reset_flag is 0, there is a possibility that the picture before the change of the picture size remains in the picture memory; therefore, it is necessary to judge which picture area should be deleted in order to accumulate the picture after the change of the picture size. The deletable picture area judgment unit 209 makes such judgment as described above; and the judging result is outputted to the picture memory control unit 206. Consequently, the picture memory is managed.

Next, the specific operations of the picture memory control unit 206, the picture size change judgment unit 207 and the deletable picture area judgment unit 209 in the decoding procedure will be explained using the flow chart of FIG. 12. Although in the flow chart in FIG. 12, the change of the picture size and the value of reset_flag are judged after the current picture is decoded, such order is arbitrary and not limited to the order as shown in FIG. 12.

First, the flow of the decoding procedure will be explained in the case where the picture size of the picture to be decoded is changed (S1204) and reset_flag is 1 (S1205). The value of reset_flag as 1 indicates that all the picture data in the picture memory is deleted and all the area is emptied. In other words, if such signal as described above is inputted into the picture memory control unit 206, it is possible that the picture memory control unit 206 deletes all the area of the picture memory (S1206), the decoded picture after the change of the picture size is saved in the arbitrary area in the picture memory (S1207).

Next, the flow of the decoding procedure will be explained in the case where the picture size of the picture to be decoded is changed (S1204), and reset_flag is 0 (S1205). The value of reset_flag as 0 indicates that all the picture data in the picture memory is made "non-reference" pictures, but the picture data itself is not deleted and left accumulated. The deletable picture area judgment unit 209 checks the free area of the picture memory. In the case where there is not enough free area, the deletable picture area judgment unit 209 compares (a) the size of the picture after the picture size change and (b) the size of one picture area which is made by dividing the picture memory. Then, the deletable picture area judgment unit 209 determines the dividing method of the decoded picture, and judges the number of the picture areas to be deleted and the picture areas to be deleted (S1208). The picture that is accumulated in the picture memory 203 has the display order information, in addition to the picture data. The deletable picture area judgment unit 209 checks the display order information. Then, the deletable picture area judgment unit 209 specifies the picture area where the picture that has the oldest display order information is accumulated, and transmits the direction to sequentially delete the specified picture areas to the picture memory control unit 206. Consequently, the specified picture areas are deleted, and the decoded picture is accumulated in the generated free area (S1210).

FIG. 18A and FIG. 18B are diagrams showing a situation where the newly decoded picture is accumulated in the picture memory 203, following the order of the steps S1204-S1210 of the flow chart as shown in FIG. 12.

FIG. 18A is an example of the case where there is enough free area to accumulate the decoded picture C in the picture memory 203. In such example as described above, P2, P6, P4 and P5 of the picture stream in FIG. 3 are accumulated in the picture memory, and P7 is decoded at present (that is, C=P7). P2, P6, P4 and P5 are the pictures that have the same picture size as the divided picture area. On the other hand, the newly decoded picture C has the picture size that is bigger than one picture area. The example of FIG. 18A indicates that the picture C is divided into two and accumulated. In such case as described above, it is possible to accumulate the decoded picture C in the free area as it is, using the two picture areas as shown in the bottom part of FIG. 18A. In other words, the picture area where the picture data is already accumulated is not deleted.

The head part of FIG. 18B is an example of the case where there is not enough free area to accumulate the decoded picture C in the picture memory. In such example as described above, P3, P1, P2, P6, P4 and P5 of the picture stream as shown in FIG. 3 are accumulated in the picture memory, and P7 is decoded at present (that is, C=P7). In such case as described above, it is necessary to delete the picture area that has the picture data before the change of the picture size and to retain an area to accumulate the decoded picture C. In such case as described above, the picture C, after the change of the picture size, has the picture size that is bigger than one picture area. Thus, it should be noted that the picture C is divided into two and accumulated using two picture areas. The picture area where the accumulated picture has the oldest display order information is selected as the picture area to be deleted. In such example as described above, it should be noted that the display order information of P1 and P2 is the oldest in such order. The deletable picture area judgment unit 209 judges the picture area to be deleted by such procedures as described above. Then, the deletable picture area judgment unit 209 outputs the judging result to the picture memory control unit 206, and deletes the picture area. In the example of the head part of FIG. 18B, P1 and P2 are deleted by such procedures as described above; and the decoded picture C as shown in the bottom part of FIG. 18B is accumulated in the newly generated free area.

Finally, the flow of the decoding procedure will be explained in the case where the picture size of the picture to be decoded is not changed when decoding, but is already changed before decoding, or in the case where the picture size of the picture to be decoded is not changed at all (S1204). According to the second embodiment, regardless of the existence of the picture whose size is different from the picture to be decoded in the picture memory 203, it is possible to manage the picture memory by the same procedure as described above. The deletable picture area judgment unit 209 checks the free area of the picture memory. In the case where there is not enough free area, the deletable picture area judgment unit 209 compares (a) the size of the picture after the picture size change and (b) the size of one picture area which is made by dividing the picture memory. Then, the deletable picture area judgment unit 209 determines the dividing method of the decoded picture, and judges the number of the picture areas to be deleted and the picture areas to be deleted. The picture that is accumulated in the picture memory has the display order information, in addition to the picture data. The deletable picture area judgment unit 209 checks the display order information. Then, the deletable picture area judgment unit 209 specifies the picture area where the picture whose display order information is the oldest is accumulated, and transmits the direction to sequentially delete the specified picture area to the picture memory control unit 206.

FIG. 19A and FIG. 19B are diagrams showing a situation where the newly decoded picture is accumulated in the picture memory 203 following the steps S1204-S1213 of the flow chart as shown in FIG. 12.

FIG. 19A is an example of the case where the picture memory has enough free area to accumulate the decoded picture C. Such example as described above shows the situation where P4, P5 and P7 of the picture stream are accumulated in the picture memory and P8 is decoded (that is, C=P8) at present. P4 and P5 have the same picture size as the picture area. On the other hand, the newly decoded picture C, after the change of the picture size, has the bigger picture size than one picture area. The example of FIG. 19A indicates that the picture C is divided into two and accumulated. In such case as described above, as shown in the bottom part of FIG. 19A, it is possible to accumulate the decoded picture C as it is in the free area, using two picture areas. In other words, the picture area that has the picture data that is already accumulated in the picture memory is not deleted.

The head part of FIG. 19B is an example of the case where the picture memory 203 does not have enough free area to accumulate the decoded picture C. In such example as described above, P2, P6, P4, P5 and P7 of the picture stream as shown in FIG. 3 are accumulated in the picture memory, and P8 is decoded (that is, C=P8) at present. In such case as described above, it is necessary to delete the picture area that has the picture data and to retain an area to accumulate the newly decoded picture C. In such case as described above, the decoded picture C, after the change of the picture size, has the bigger picture size than one picture area. The example of FIG. 19B indicates that the picture C is divided into two and accumulated. Also, the picture area whose picture has the oldest display order information is selected as the picture area to be deleted. In such example as described above, it is noticeable that the display order information of P2 and P4 are the oldest in such order. The deletable picture area judgment unit 209 judges the picture area to be deleted by such procedures as described above. Then, the deletable picture area judgment unit 209 outputs the judging result to the picture memory control unit 206, and deletes the picture. In the example of the head part of FIG. 19B, P2 and P4 are deleted by such procedures of judging the deletable picture areas as described above, and the newly decoded picture C is accumulated in the generated free area as shown in the bottom part of FIG. 19B.

Although in the second embodiment as described above, when deleting the picture area from the picture memory 203 for decoding, the picture area is sequentially deleted from the one whose picture has the oldest display order information, it is possible to perform the same procedures in the case of deleting the picture whose order to be decoded is the oldest, in stead of the display order information.

As recognized from such explanations as described above, according to the second embodiment, it is not necessary to distinguish the following two cases (a) and (b) because the picture memory 203 can be managed by the same procedures: (a) the case where the picture size of the picture C is changed, and (b) the case where the picture size of the picture C is not changed. In other words, in both cases where the picture size is changed or not changed when coding, by the simple processing method that always deletes only the necessary picture area(s) to be deleted by judging how many areas are necessary for the decoded pictures, leaving as many pictures that may not be displayed as possible in the picture memory, the picture memory can be managed without any contradictions. Also, on the coding side, in addition to the conventional method, it is possible to perform the procedures of the second embodiment only by (i) coding (a) the information of the smallest picture size included in the stream or (b) the size of one picture area which is made by dividing the picture memory, on the decoding side, and (ii) writing the coded information in the coded stream, thus the picture coding apparatus is easily implemented. Also, it is possible to arbitrarily set the dividing size of the decoded picture in consideration with the efficiency of the memory access. Consequently, decoding can be performed without lowering the speed of the memory access.

(Third Embodiment)

According to the first embodiment, the information to specify the dividing method of the picture memory is generated in the picture coding apparatus, and written in the coded stream. On the other hand, according to the third embodiment, the dividing method of the picture memory is analyzed and decided in the picture decoding apparatus. Thus, the coding method of the moving picture according to the third embodiment is the same as the conventional coding method as explained in FIG. 1; and the explanation will be omitted here.

FIG. 20 is a block diagram showing a structure of the picture decoding apparatus 2000 according to the third embodiment. The decoding method of the moving picture according to the third embodiment will be explained, using a block diagram as shown in FIG. 20, as following. The structure of the decoding procedure is similar to the method according to the first embodiment as explained using FIG. 11. The difference from the method according to the first embodiment is that the address division unit 210A is provided, in place of the picture memory dividing method specification unit 210. Here, the same procedures as the first embodiment will be omitted.

The picture size change judgment unit 207 compares (a) the picture size of the picture to be decoded and (b) the picture size of the picture which has been decoded previously (or just before), and judges whether or not the picture size has been changed. When the picture size change judgment unit 207 judges that the picture size has been changed, it notifies the picture size after the change to the address division unit 210A via the coded stream analysis unit 201. The address division unit 210A divides the address space of the picture memory 203 so that the picture size, after the picture size change, which is notified by the picture size change judgment unit 207 becomes the picture size of each picture area. And, the address division unit 210A directs the picture memory control unit 206 to manage the picture memory 203 using the address after the division as a unit.

The number of the areas which are divided as described above is calculated by the equation 8 as shown below. Here, the calculation result of the division in the equation is calculated as an integer number by the round down procedure.

$$\text{(the number of the picture areas)} = \text{(the size of the picture}$$

$$\text{memory 203 of the picture decoding apparatus 2000)} / \text{(the picture}$$

$$\text{size after the picture size change)} \qquad\qquad \text{(Equation 8)}$$

Also, the picture size and the picture memory size as described above can have any of the followings as a unit: the whole number of pixels, the whole number of macroblocks and the whole number of bits; and all of them can be treated in the same manner.

Next, the specific operations of the decoding procedure of the picture memory control unit 206, the picture size change judgment unit 207, the deletable picture area judgment unit 209 and the address division unit 210A will be explained using FIG. 21. FIG. 21 is a flow chart showing the order of the decoding procedure of the picture decoding apparatus 2000 as shown in FIG. 20.

First, when the picture size of the current picture to be decoded is changed (S2301), the address division unit 210A acquires the picture size of the current picture to be decoded, that is, the picture size, after the picture size change, from the picture size change judgment unit 207, via the coded stream analysis unit 201(S2302). The address division unit 210A divides the address space of the picture memory 203 with the acquired picture size. And, the address division unit 210A directs the picture memory control unit 206 to manage the picture memory 203 using the divided picture area as a unit (S2303). In the case where the picture size of the picture to be decoded is not changed (S2301), the procedures of the step S2302 and the step S2303 are not performed.

Next, the deletable picture area judgment unit 209 checks the free area of the picture area 203 (S2304). In the case where none of the divided picture areas exists as a serial free area, the deletable picture area judgment unit 209 sequentially deletes the picture of the picture memory 203 from the one whose display order is the oldest, until at least one of the picture areas becomes a free area (S2305). Specifically, the picture which is accumulated in the picture memory 203 has the information that indicates the display order of the picture, in addition to the picture data. The deletable picture area judgment unit 209 checks such display order information as described above, and transmits the direction to sequentially delete the picture from the picture whose display order information is the oldest to the picture memory control unit 206. The picture memory control unit 206 repeats the procedure to delete the picture specified by the deletable picture area judgment unit 209 until one of the divided picture areas becomes a free area, and accumulates the newly decoded picture in the open picture area (S2306) when one of the divided picture areas becomes a free area. In the case where one of the divided picture areas is already a free area (S2304), the newly decoded picture is accumulated as it is in such picture area as described above (S2306).

FIG. 22A and FIG. 22B are diagrams showing the situation where the newly decoded picture is accumulated in the picture memory 203, according to the order of the flow chart as shown in FIG. 21. FIG. 22A and FIG. 22B show the case where the picture size of the backward picture from the picture C for decoding is changed to a larger size. FIG. 22A shows an example of the case where the picture memory 203 has enough free area to accumulate the newly decoded picture C. FIG. 22A shows the situation where P2, P4, P5 and P6 of the picture stream in FIG. 3 are accumulated in the picture memory, and P7 is decoded at present (that is, C=P7). In FIG. 22A the picture size is changed from the picture P7 which is the picture C for decoding. As the bottom part of FIG. 22A shows, the address of the picture memory 203 is divided by the picture size of P7. In such case as described above, as the bottom part of FIG. 22A shows, it is possible to accumulate the newly decoded picture C as it is in the free area. The picture area that has the picture data that is already accumulated in the picture memory is not deleted.

FIG. 22B shows an example of the case where the picture memory 203 does not have enough free area to accumulate the newly decoded picture C. Such example as described above shows the situation where P1, P2, P3, P4, P5 and P6 of the picture stream in FIG. 3 are accumulated in the picture memory 203, and P7 is decoded at present (that is, C=P7). In this case, it is necessary to delete the area that has the picture data accumulated in the picture memory 203, and to retain the area to accumulate the newly decoded picture C. According to the third embodiment, the picture C for decoding always has the same picture size as the picture area that is made by dividing the picture memory. Thus, in the case where the picture memory 203 does not have a free area, by deleting the picture until one of the picture areas in the picture memory completely becomes a free area, the area for accumulating the newly decoded picture can be retained. The picture to be deleted is sequentially selected from the one whose display order information is the oldest among the accumulated pictures. In such example as described above, it should be noted that the display order information of P1 is the oldest. However, if only P1 is deleted, none of the picture areas that are divided, adjusting to the picture size of the picture C for decoding , can be a free area. At the stage where P2 and P3 are deleted after P1, according to the display order information, the second picture area from the head address of the picture memory 203 becomes one free area. The deletable picture area judgment unit 209 judges the picture to be deleted by such procedure as described above, and outputs the judgment result to the picture memory control unit 206. The picture memory control unit 206 deletes the picture according to the judgment result of the deletable picture area judgment unit 209. In the example of the head part of FIG. 22B, P1, P2 and P3 are deleted by such procedure as described above; and as the bottom part of FIG. 22B shows, the newly decoded picture C is accumulated in the generated free area.

FIG. 23A and FIG. 23B are diagrams showing the situation where the newly decoded picture is accumulated in the picture memory 203, according to the order of the flow chart as shown in FIG. 21. FIG. 23A and FIG. 23B show the case where the present picture size of the backward picture from the picture C for decoding is changed to a smaller size. FIG. 23A shows an example of the case where the picture memory 203 has enough free area to accumulate the newly decoded picture C. In this example, P1, P2 and P3 of the picture stream as shown in FIG. 3 are accumulated in the picture memory; and P4 is decoded at present (that is, C=P4). In such example as described above, the picture size of P4, which is the picture C for decoding, is changed; and as the bottom part of FIG. 23A shows, the address of the picture memory 203 is divided by the picture size of P4. In such case as described above, as the bottom part of FIG. 23A shows, it is possible to accumulate the newly decoded picture C in a picture area of the free area without any discrepancies. And, the picture area that has the picture data that is already accumulated in the picture memory is not deleted.

FIG. 23B shows an example of the case where the picture memory 203 does not have enough free area to accumulate the newly decoded picture C. In this example, P1, P2, P3 and P4 of the picture stream as shown in FIG. 3 are accumulated in the picture memory 203; and P5 is decoded at present (that is, C=P5). In such case as described above, it is necessary to delete the area where the picture data is already accumulated and to retain an area to accumulate the newly decoded picture C in the picture memory 203. According to the third embodiment, the picture C for decoding always has the same picture size as the picture area that is made by dividing the picture memory. Thus, in the case where the picture memory 203 does not have a free area, by deleting the picture until one of the picture areas in the picture memory completely becomes a free area, the area for accumulating the newly decoded picture can be retained. The picture to be deleted is sequentially selected from the one whose display order information is the oldest among the accumulated pictures. In such example as described above, it should be noted that the display order information of P1 is the oldest. By deleting P1, one picture area becomes a free area. The deletable picture area judgment unit 209 judges the picture to be deleted by such procedure as described above, and outputs the judgment result to the picture memory control unit 206. The picture memory control unit 206 deletes the picture according to the judgment result of the deletable picture area judgment unit 209. In the example of the head part of FIG. 23B, P1 is deleted by such procedure as described above; and as the bottom part of FIG. 23B shows, the newly decoded picture C is accumulated in the generated free area.

Although according to the third embodiment, when the picture area is deleted from the picture memory 203, the picture area is sequentially deleted from the one where the accumulated picture has the oldest display information, the same procedures can be performed in the case where the picture area is deleted from the one where the accumulated picture has the oldest turn to be decoded, in stead of the display order information.

As recognized from such explanation as described above, according to the third embodiment, it is not necessary to distinguish the following two cases (a) and (b) because the picture memory 203 can be managed by the same procedures: (a) the case where the picture size of the picture C for decoding is changed, and (b) the case where the picture size of the picture C for decoding is not changed. In other words, in both cases where the picture size is changed or not changed when coding, by the simple procedure that always deletes the stored picture until one picture area completely becomes a free area, leaving as many pictures that may not be displayed as possible in the picture memory, the picture memory can be managed without any contradictions. Also, each size of the newly divided picture areas is the same as the pictures to be newly decoded (the backward pictures of the picture C for decoding); thus, in both cases where the picture size is changed to a larger size and a smaller size, the useless area that is not used does not occur in either of the picture areas. Therefore, in the picture decoding apparatus 2000 of the third embodiment, the memory area of the picture memory 203 is efficiently utilized. In addition, it is possible to sequentially accumulate a picture of any picture size, without physically divided, on the picture memory, simplifying the access to the picture memory, thereby it is possible to perform decoding without lowering the speed. Also, in the regular picture coding and decoding, even if the picture size is changed, the structure that performs coding and decoding without changing the reference relations of the pictures (for example, the number of the pictures to use for reference) is often used. Consequently, according to such method as explained in the third embodiment, it is possible to perform decoding by the efficient procedures.

However, according to the third embodiment, the picture data is not accumulated from the head of the free area, but the head of the picture area of the free area; therefore, as FIG. 22B shows, there is a possibility that the area that is bigger than the space to accumulate one picture C for decoding is deleted. Thus, in order to accumulate the newly decoded picture C, when the picture is sequentially deleted from the one whose display order is the oldest until one picture area becomes a free area, especially in the case where the picture whose display order information is old is not accumulated in the display order in the serial area within the picture memory 203, there is a possibility that the "display-waiting picture" may be deleted as well.

According to the third embodiment, the picture is deleted from the one whose display order information is the oldest; and when one picture area becomes a serial free area, the newly decoded picture C is accumulated in the picture area. However, the present invention is not limited to such method as described above; and the picture C for decoding can be accumulated in a different manner. In other words, regardless of the display order information of the picture, the already accumulated picture is sequentially deleted from the head address until one picture area of the head of the picture memory 203 becomes a serial free area. When a head picture area becomes a serial free area, the newly decoded picture C is accumulated in the picture area. Next, in the case where the decoded picture C is accumulated, the pictures are deleted in the order of the address from the next address of the picture that is deleted last, until the second picture area from the head of the picture memory 203 becomes a serial free area. FIG. 24 is a flow chart showing the order of the other decoding procedures in the picture decoding apparatus 2000 as shown in FIG. 20.

In FIG. 24 the procedures of the step 52601-the step S2603 are the same as the procedures of the step S2301-the step S2303 as shown in FIG. 21. By such procedures as described above, (i) the picture size of the picture to be decoded is changed; (ii) the address space of the picture memory 203 is divided by the picture size after the picture size change; and (iii) the picture memory 203 is managed using the divided picture area as a unit.

Next, the deletable picture area judgment unit 209 checks the free area of the picture memory 203. If the picture memory 203 has enough free area including the picture area to accumulate the newly decoded picture, the deletable picture area judgment unit 209 accumulates the newly decoded picture as it is in the open picture area (S2606). If the picture area to accumulate the newly decoded picture does not exist as a free area (S2604), the deletable picture area judgment unit 209 makes the next picture area to the picture area where the decoded picture is accumulated last a free area, sequentially from the head of the picture memory 203 (S2605). And, the deletable picture area judgment unit 209 accumulates the newly decoded picture in the open picture area (S2606). FIG. 25 is a flow chart showing the more specific order of the procedure of the step S2605 as shown in FIG. 24. More specifically, the picture memory control unit 206 is equipped with a pointer that indicates a predetermined address location within the picture memory 203 that is used only when the picture memory 203 does not have enough free area to accumulate a new picture. Here, the predetermined address location is, for example, the head address of each picture area. Also, the initial value of the pointer is set as "0" which indicates the head address of the head picture area of the picture memory 203. In addition, the pointer = (N-1) indicates the head address of the Nth picture area from the head of the picture memory 203 (N is a natural number).

In the case where it is judged that the picture area to accumulate the newly decoded picture does not exist as a free area (S2604), the deletable picture area judgment unit 209 has the picture memory control unit 206 delete the picture in the picture area that is indicated by the pointer, in the address order (S2501-S2503). For example, when the pointer = 0, the picture in the picture memory 203 is sequentially deleted from the head of the picture memory until the head picture area of the picture memory 203 becomes a free area. When the head picture area in the picture memory 203 becomes a free area (S2502), the picture memory control unit 206 increments the pointer as "1" (S2504), and has the pointer point at the head address of the next picture area.

Here, the picture memory control unit 206 checks whether or not the value of the pointer is bigger than the number of all the picture areas. When the value of the pointer becomes bigger than the number of all the picture areas (S2505), the value of the pointer is returned to "0"; and the head address of the head picture area in the picture memory 203 is pointed at. In the case where the value of the pointer becomes bigger than the number of all the picture areas, it indicates that newly decoded pictures are accumulated in all the picture areas in the picture memory 203.

According to such procedures as described above, in the case where the picture memory 203 does not have an open picture area to accumulate a newly decoded picture, the picture data is sequentially deleted from the head of the picture memory; and a newly decoded picture is accumulated in the open picture area.

FIG. 26A and FIG. 26B are diagrams showing the situation where the newly decoded picture is accumulated in the picture memory 203, according to the order of the flow chart as shown in FIG. 24 and FIG. 25. FIG. 26A and FIG. 26B show the case where the picture size of the picture after the present picture C for decoding is changed to a larger size. FIG. 26A shows an example of the case where the picture memory 203 has enough free area to accumulate the newly decoded picture C. FIG. 26A shows the situation where P2, P4, P5 and P6 of the picture stream as shown in FIG. 3 are accumulated in the picture memory, and P7 is decoded at present (that is, C=P7). In FIG. 26A the picture size is changed from the picture P7 which is the picture C for decoding. As the bottom part of FIG. 26A shows, the address of the picture memory 203 is divided by the picture size of P7. In such case as described above, as the oblique lined part 2 of the head part of FIG. 26A shows, because the head part of the picture memory 203 has enough free area, it is possible to accumulate the newly decoded picture C as it is in the free area. Thus, the picture area that has the picture data that is already accumulated in the picture memory is not deleted.

FIG. 26B shows an example of the case where the picture memory 203 does not have enough free area to accumulate the newly decoded picture C. Such example as described above shows the situation where P1, P2, P3, P4, P5 and P6 of the picture stream as shown in FIG. 3 are accumulated in the picture memory 203, and P7 is decoded at present (that is, C=P7). In this case, it is necessary to delete the area that has the picture data accumulated in the picture memory 203, and to retain the area to accumulate the newly decoded picture C. According to the third embodiment, the picture C for decoding always has the same picture size as the picture area that is made by dividing the picture memory. Thus, in the case where the picture memory 203 does not have a free area, by deleting the picture until one of the picture areas in the picture memory completely becomes a free area, the area for accumulating the newly decoded picture can be retained. The picture to be deleted is sequentially selected in the address order from the head of the picture memory 203. In such example as described above, at the stage where P4 and P1 are deleted in such order, the first picture area from the head of the picture memory 203 becomes one free area. The deletable picture area judgment unit 209 judges the picture to be deleted by such procedure as described above, and outputs the judgment result to the picture memory control unit 206. The picture memory control unit 206 deletes the picture according to the judgment result of the deletable picture area judgment unit 209. In the example of the head part of FIG. 26B, P4 and P1 are deleted by such procedure as described above; and as the bottom part of FIG. 26B shows, the newly decoded picture C is accumulated in the head of the picture area. Also, when the next picture C for decoding is further decoded, with the picture memory 203 in the situation as shown in the bottom part of FIG. 26B, the newly decoded picture has to be accumulated. In such case as described above, P2 and P3 are deleted; and the newly decoded picture is accumulated in the second open picture area.

FIG. 27A and FIG. 27B are diagrams showing the situation where the newly decoded picture is accumulated in the picture memory 203, according to the order of the flow chart as shown in FIG. 24 and FIG. 25. FIG. 27A and FIG. 27B show the case where the picture size of the picture after the present picture C for decoding is changed to a smaller size. FIG. 27A shows an example of the case where the picture memory 203 has enough free area to accumulate the newly decoded picture C. In this example, P1, P2 and P3 of the picture stream as shown in FIG. 3 are accumulated in the picture memory; and P4 is decoded at present (that is, C=P4). In such example as described above, the picture size of the pictures that are backward of P4 which is a picture to be decoded, is changed; and as the bottom part of FIG. 27A shows, the address of the picture memory 203 is divided by the picture size of the picture C for decoding (P4). In such case as described above, as the bottom part of FIG. 27A shows, it is possible to accumulate the newly decoded picture C in a picture area of the free area without any discrepancies. And, the picture area that has the picture data that is already accumulated in the picture memory is not deleted.

FIG. 27B shows an example of the case where the picture memory 203 does not have enough free area to accumulate the newly decoded picture C. In this example, P1, P2, P3 and P4 of the picture stream as shown in FIG. 3 are accumulated in the picture memory 203; and P5 is decoded at present (that is, C=P5). In such case as described above, it is necessary to (i) delete the area where the picture data is already accumulated and (ii) retain an area to accumulate the newly decoded picture C in the picture memory 203. According to the third embodiment, the picture C for decoding always has the same picture size as the picture area that is made by dividing the picture memory. Thus, in the case where the picture memory 203 does not have a free area, by deleting the picture until one of the picture areas in the picture memory completely becomes a free area, the area for accumulating the newly decoded picture can be retained. The picture to be deleted is sequentially selected, in the order of the address where the picture data is stored, from the head of the picture memory 203. In such example as described above, it should be noted that the address of P3 is the very head. By deleting P3, one picture area of the head of the picture memory 203 becomes a free area. The deletable picture area judgment unit 209 judges the picture to be deleted by such procedure as described above, and outputs the judgment result to the picture memory control unit 206. The picture memory control unit 206 deletes the picture according to the judgment result of the deletable picture area judgment unit 209. In the example of the head part of FIG. 27B, P3 is deleted by such procedure as described above; and as the bottom part of FIG. 27B shows, the newly decoded picture C is accumulated in the head picture area of the picture memory 203. In such situation as described above, when the next picture C for decoding is further decoded, P2 is deleted from the situation as shown in the bottom part of FIG. 27B; and the newly decoded picture is stored in the second picture area from the head of the picture memory 203.

Although in the example explained using the diagrams of FIG. 24-FIG. 27B, in the case where the picture memory 203 has enough free area to accumulate the newly decoded picture, the newly decoded picture is accumulated in one open picture area, the present invention is not limited to such method as described above. For example, even in the case where the picture memory 203 has enough free area, the picture area can be selected in the address order from the head of the picture memory 203; and the picture data accumulated in the selected picture area can be sequentially deleted per picture until the selected picture area becomes a serial free area. As a result, the newly decoded picture is accumulated in the open picture area. In other words, as shown in the head part of FIG. 27A, even in the case where there is enough free area to accumulate the picture C for decoding, the picture P1 accumulated in the head of the picture memory 203 can be deleted; and the picture C for decoding can be accumulated in the head open picture area of the picture memory 203. Thus, in both cases where (a) the picture memory has enough free area to accumulate the newly decoded picture and (b) the picture memory does not have enough free area to accumulate the newly decoded picture, the picture area can be selected in the address order from the head of the picture memory in the same manner; and the newly decoded picture can be accumulated in the selected picture area. Consequently, as there are a few branches of the judgment, it is possible to decrease the throughput required for the deletable picture judgment unit 209 to retain a picture area.

As recognized from such explanations as described above, according to the third embodiment, in both cases where the picture size is changed or not changed when coding, by the simple procedure that always deletes the stored picture until one picture area completely becomes a free area, leaving as many pictures that may not be displayed as possible in the picture memory, the picture memory can be managed without any contradictions. Also, each size of the newly divided picture areas is the same as the pictures to be newly decoded (the backward pictures of the picture C for decoding); thus, in both cases where the picture size is changed to a larger size and a smaller size, the useless area that is not used does not occur in either of the picture areas. Therefore, in the picture decoding apparatus 2000 of the third embodiment, the memory area of the picture memory 203 is efficiently utilized. In addition, it is possible to sequentially accumulate a picture of any picture size, without physically divided, on the picture memory, simplifying the access to the picture memory, thereby it is possible to perform decoding without lowering the speed. Also, in the regular picture coding and decoding, even if the picture size is changed, the structure that performs coding and decoding without changing the reference relations of the pictures (for example, the number of the pictures to use for reference) is often used. Consequently, according to such method as explained in the third embodiment, it is possible to perform decoding by the efficient procedures.

However, according to the third embodiment, the picture is sequentially deleted from the head of the picture memory, ignoring the display order, until the free area is retained. Thus, especially when the picture that has new display order information is stored in a location close to the head of the picture memory, there is a possibility that even the "display-waiting picture" may be deleted.

Also, according to the third embodiment as described above, it is necessary to delete one or plural pictures until one of the picture areas of the picture memory completely becomes a free area, there is a possibility that even the picture that is not displayed yet may be deleted. Here, it is possible to use cnf_flag as a flag to indicate whether or not all the pictures included in the stream can be displayed without any problems. For example, when the value of cnf_flag is 1, it indicates that all the pictures can be displayed without any problems. When the value of cnf_flag is 0, it indicates the possibility that the pictures that are not displayed yet may not be displayed because the data is already lost, due to the procedures of the third embodiment. Thus, by writing cnf_flag in the coded stream and checking the value of this signal, it is possible to judge whether or not the procedures of the third embodiment can be applied. For example, when the value of cnf_flag is 0, it should be noted that if the procedures of the third embodiment are applied, there is a possibility that some of the pictures cannot be displayed. Therefore, instead, it is possible to switch to the conventional method where the picture memory is managed per picture. Consequently, with a possibility that the memory area may be fragmented, all the pictures can be displayed without any problems.

(Fourth Embodiment)

The coding method of the moving picture according to the fourth embodiment of the present invention will be explained using a block diagram as shown in FIG. 28. FIG. 28 is a block diagram showing a structure of the picture coding apparatus 2700 according to the fourth embodiment. The structure of the coding procedure is similar to the conventional method as explained using FIG. 1. The difference from the conventional method is that the picture size change judgment unit 110 is added. The explanation of the same procedures as the conventional technology will be omitted here. FIG. 29 is a diagram showing a data structure of the coded stream which is generated by the picture coding apparatus 2700 according to the fourth embodiment.

In the case where the picture for coding is a picture capable of changing the size of an IDR picture or an equivalent picture thereto, the picture size change judgment unit 110 compares (a) the picture size of the picture for coding and (b) the picture size of the picture that is already coded, and judges whether or not the picture size has been changed.

In the case where the judgment result inputted by the picture size change judgment unit 110 indicates that the picture size has not been changed, the picture memory control unit 109 performs coding, using the same method as the regular coding. On the other hand, in the case where the judgment result indicates that the picture size has been changed, the signal indicating that all the pictures in the picture memory are deleted, regardless of the "reference pictures" or "non-reference pictures", as a reset method of the picture memory when decoding, is outputted to the coded stream generation unit 103. The coded stream generation unit 103 performs coding by setting reset_flag of the coded stream as shown in FIG. 29 as "1", which indicates that all the pictures in the picture memory (regardless of the "reference pictures" and "non-reference pictures") are deleted.

On the other hand, it is possible to perform decoding of the coded stream coded by such coding method as described above, using the same structure as the block diagram used to explain the conventional method as shown in FIG. 2. The explanation of the same procedures as the conventional technology will be omitted here.

reset_flag is coded in the slice header of the coded stream as shown in FIG. 29. The coded stream analysis unit 201 analyzes the value of the reset_flag, and outputs the information of the analysis result to the picture memory control unit 206. In the case where the picture size has been changed, the coded stream generated by such coding method as described above directs that all the pictures in the picture memory be deleted, regardless of the "reference pictures" and "non-reference pictures". Thus, when decoding, without concerning whether or not the picture size has been changed in the same manner as the conventional method, the picture memory can be reset according to the value of reset_flag. In the case where the picture size has been changed, (i) all the area of the picture memory becomes empty, due to the direction of the reset_flag; (ii) the picture after the picture size change is conventionally decoded; (iii) the decoded picture is accumulated in the picture memory; (iv) the pictures of different sizes do not exist in the picture memory; thereby (v) it is possible to use an arbitrary area as a location for accumulating the decoded picture.

As explained in the fourth embodiment, in the case where the picture size has been changed when coding, it is possible to manage the picture memory without any contradictions by coding the flag that has the value indicating that all the pictures in the picture memory are deleted and by performing the same procedures as the conventional method on the decoding side.

(Fifth Embodiment)

Furthermore, the processing shown in each of the above embodiments 1-4 can be carried out easily in an independent computer system by recording a program for realizing the moving picture coding/decoding methods described in each of the above embodiments onto a recording medium such as a flexible disk or the like.

FIG. 30A, FIG. 30B and FIG. 30C are an illustration of a recording medium for recording a program for realizing the moving picture coding/decoding method described in the above embodiments in the computer system.

FIG. 30B shows a full appearance of a flexible disk, its structure at cross section and the flexible disk itself whereas FIG. 30A shows an example of a physical format of the flexible disk as a main body of a recording medium. A flexible disk FD is contained in a case F with a plurality of tracks Tr formed concentrically from the periphery to the inside on the surface of the disk, and each track is divided into 16 sectors Se in the angular direction. Thus, the moving picture coding method and the moving picture decoding method as the program are recorded in an area assigned for it on the flexible disk FD.

FIG. 30C shows a configuration for recording and regenerating the program on the flexible disk FD. When the program is recorded on the flexible disk FD, the computer system Cs writes in the moving picture coding and decoding methods as the program via a flexible disk drive FDD. When the moving picture coding and decoding methods are constructed in the computer system using the program on the flexible disk, the program is read out from the flexible disk and then transferred to the computer system by the flexible disk drive FDD.

The above explanation is made on an assumption that a recording medium is a flexible disk, but the same processing can also be performed using an optical disk. In addition, the recording medium is not limited to a flexible disk and an optical disk, but any other medium such as a CD-ROM, a memory card and a ROM cassette capable of recording a program can be used.

(Sixth Embodiment)

The following is a description for the applications of the moving picture coding and decoding methods illustrated in the above-mentioned embodiments 1-5 and a system using them.

FIG. 31 is a block diagram showing an overall configuration of a content supply system ex100 for realizing content delivery service. The area for providing communication service is divided into cells of desired size, and cell sites ex107~ex110, which are fixed wireless stations, are placed in respective cells.

This content supply system ex100 is connected to apparatuses such as a computer ex111, a Personal Digital Assistant (PDA) ex112, a camera ex113, a cell phone ex114 and a cell phone with a camera ex115 via, for example, Internet ex101, an Internet service provider ex102, a telephone network ex104, as well as the cell sites ex107~ex110.

However, the content supply system ex100 is not limited to the configuration shown in Fig. 31 and may be connected to a combination of any of them. Also, each apparatus may be connected directly to the telephone network ex104, not through the cell sites ex107~ex110.

The camera ex113 is an apparatus capable of shooting video such as a digital video camera. The cell phone ex114 may be a cell phone of any of the following system: a Personal Digital Communications (PDC) system, a Code Division Multiple Access (CDMA) system, a Wideband-Code Division Multiple Access (W-CDMA) system or a Global System for Mobile Communications (GSM) system, a Personal Handyphone System (PHS), or the like.

A streaming server ex103 is connected to the camera ex113 via the telephone network ex104 and also the cell site ex109, which realizes a live distribution or the like using the camera ex113 based on the coded data transmitted from the user. Either of the camera ex113, the server which transmits the data and the like may code the data. The moving picture data shot by a camera ex116 may be transmitted to the streaming server ex103 via the computer ex111. In this case, either the camera ex116 or the computer ex111 may code the moving picture data. An LSI ex117 included in the computer ex111 and the camera exll6 performs the coding processing. Software for coding and decoding a moving picture may be integrated into any type of recording medium (such as a CD-ROM, a flexible disk and a hard disk) that is a recording medium which is readable by the computer ex111 or the like. Furthermore, a cell phone with a camera ex115 may transmit the moving picture data. This moving picture data is the data coded by the LSI included in the cell phone ex115.

The content supply system ex100 codes contents (such as a music live video) shot by a user using the camera ex113, the camera ex116 or the like in the same way as shown in the above-mentioned embodiments 1-5 and transmits them to the streaming server ex103, while the streaming server ex103 makes stream delivery of the content data to the clients at their requests. The clients include the computer ex111, the PDA ex112, the camera ex113, the cell phone ex114 and so on capable of decoding the above-mentioned coded data. In the content supply system ex100, the clients can thus receive and reproduce the coded data, and can further receive, decode and reproduce the data in real time so as to realize personal broadcasting.

When each apparatus in this system performs coding or decoding, the moving picture coding apparatus or the moving picture decoding apparatus shown in the above-mentioned embodiments can be used.

A cell phone will be explained as an example of such apparatus.

FIG. 32 is a diagram showing the cell phone ex115 using the moving picture coding and decoding methods explained in the above-mentioned embodiments. The cell phone ex115 has an antenna ex201 for communicating with the cell site ex110 via radio waves, a camera unit ex203 such as a CCD camera capable of shooting moving and still pictures, a display unit ex202 such as a liquid crystal display for displaying the data such as decoded pictures and the like shot by the camera unit ex203 or received by the antenna ex201, a body unit including a set of operation keys ex204, a voice output unit ex208 such as a speaker for outputting voice, a voice input unit ex205 such as a microphone for inputting voice, a recording medium ex207 for recording coded or decoded data such as data of moving or still pictures shot by the camera, data of received e-mails and that of moving or still pictures, and a slot unit ex206 for attaching the recording medium ex207 to the cell phone ex115. The recording medium ex207 stores in itself a flash memory element, a kind of Electrically Erasable and Programmable Read Only Memory (EEPROM) that is a nonvolatile memory electrically erasable from and rewritable to a plastic case such as an SD card.

Next, the cell phone ex115 will be explained with reference to FIG. 33. In the cell phone ex115, a main control unit ex311, designed in order to control overall each unit of the main body which contains the display unit ex202 as well as the operation keys ex204, is connected mutually to a power supply circuit unit ex310, an operation input control unit ex304, a picture coding unit ex312, a camera interface unit ex303, a Liquid Crystal Display (LCD) control unit ex302, a picture decoding unit ex309, a multiplexing/demultiplexing unit ex308, a read/write unit ex307, a modem circuit unit ex306 and a voice processing unit ex305 via a synchronous bus ex313.

When a call-end key or a power key is turned ON by a user's operation, the power supply circuit unit ex310 supplies the respective units with power from a battery pack so as to activate the digital cell phone with a camera ex115 as a ready state.

In the cell phone ex115, the voice processing unit ex305 converts the voice signals received by the voice input unit ex205 in conversation mode into digital voice data under the control of the main control unit ex311 including a CPU, ROM and RAM, the modem circuit unit ex306 performs spread spectrum processing for the digital voice data, and the communication circuit unit ex301 performs digital-to-analog conversion and frequency conversion for the data, so as to transmit it via the antenna ex201. Also, in the cell phone ex115, the communication circuit unit ex301 amplifies the data received by the antenna ex201 in conversation mode and performs frequency conversion and the analog-to-digital conversion to the data, the modem circuit unit ex306 performs inverse spread spectrum processing of the data, and the voice processing unit ex305 converts it into analog voice data so as to output it via the voice output unit ex208.

Furthermore, when transmitting an e-mail in data communication mode, the text data of the e-mail inputted by operating the operation keys ex204 of the main body is sent out to the main control unit ex311 via the operation input control unit ex304. In the main control unit ex311, after the modem circuit unit ex306 performs spread spectrum processing of the text data and the communication circuit unit ex301 performs the digital-to-analog conversion and the frequency conversion for the text data, the data is transmitted to the cell site ex110 via the antenna ex201.

When picture data is transmitted in data communication mode, the picture data shot by the camera unit ex203 is supplied to the picture coding unit ex312 via the camera interface unit ex303. When it is not transmitted, it is also possible to display the picture data shot by the camera unit ex203 directly on the display unit ex202 via the camera interface unit ex303 and the LCD control unit ex302.

The picture coding unit ex312, which includes the moving picture coding apparatus as described for the present invention, compresses and codes the picture data supplied from the camera unit ex203 using the coding method employed by the moving picture coding apparatus as shown in the embodiments mentioned above so as to transform it into coded image data, and sends it out to the multiplexing/demultiplexing unit ex308. At this time, the cell phone ex115 sends out the voice received by the voice input unit ex205 during the shooting with the camera unit ex203 to the multiplexing/demultiplexing unit ex308 as digital voice data via the voice processing unit ex305.

The multiplexing/demultiplexing unit ex308 multiplexes the coded image data supplied from the picture coding unit ex312 and the voice data supplied from the voice processing unit ex305, using a predetermined method, then the modem circuit unit ex306 performs spread spectrum processing of the multiplexed data retained as a result of the multiplexing, and lastly the communication circuit unit ex301 performs digital-to-analog conversion and frequency transform of the data for the transmission via the antenna ex201.

As for receiving data of a moving picture file which is linked to a Web page or the like in data communication mode, the modem circuit unit ex306 performs inverse spread spectrum processing for the data received from the cell site ex110 via the antenna ex201, and sends out the multiplexed data retained as a result of the inverse spread spectrum processing.

In order to decode the multiplexed data received via the antenna ex201, the multiplexing/demultiplexing unit ex308 demultiplexes the multiplexed data into a coded stream of image data and that of voice data, and supplies the coded image data to the picture decoding unit ex309 and the voice data to the voice processing unit ex305, respectively via the synchronous bus ex313.

Next, the picture decoding unit ex309, including the moving picture decoding apparatus as described in the present invention, decodes the coded stream of the image data using the decoding method corresponding to the coding method as shown in the above-mentioned embodiments to generate reproduced moving picture data, and supplies this data to the display unit ex202 via the LCD control unit ex302, and thus the image data included in the moving picture file linked to a Web page, for instance, is displayed. At the same time, the voice processing unit ex305 converts the voice data into analog voice data, and supplies this data to the voice output unit ex208, and thus the voice data included in the moving picture file linked to a Web page, for instance, is reproduced.

The present invention is not limited to the above-mentioned system since ground-based or satellite digital broadcasting has been in the news lately and at least either the moving picture coding apparatus or the moving picture decoding apparatus described in the above-mentioned embodiments can be incorporated into a digital broadcasting system as shown in FIG. 34. More specifically, a coded stream of video information is transmitted from a broadcast station ex409 to or communicated with a broadcast satellite ex410 via radio waves. Upon receipt of it, the broadcast satellite ex410 transmits radio waves for broadcasting. Then, a home-use antenna ex406 with a satellite broadcast reception function receives the radio waves, and a television (receiver) ex401 or a Set Top Box (STB) ex407 decodes a coded bit stream for reproduction. The moving picture decoding apparatus as shown in the above-mentioned embodiments can be implemented in the regenerating apparatus ex403 for reading out and decoding the coded stream recorded on a recording medium ex402 such as a CD and a DVD. In this case, the reproduced moving picture signals are displayed on a monitor ex404. It is also conceivable to implement the moving picture decoding apparatus in the STB ex407 connected to a cable ex405 for a cable television or the antenna ex406 for satellite and/or ground-based broadcasting so as to reproduce them on a monitor ex408 of the television ex401. The moving picture decoding apparatus may be incorporated into the television, not in the Set Top Box. Also, a car ex412 having an antenna ex411 can receive signals from the satellite ex410 or the cell site ex107 for replaying a moving picture on a display device such as a car navigation system ex413 set in the car ex412.

Furthermore, the moving picture coding apparatus as shown in the above-mentioned embodiments can code picture signals and record them on the recording medium. As a concrete example, a recorder ex420 such as a DVD recorder for recording picture signals on a DVD disk ex421, a disk recorder for recording them on a hard disk can be cited. They can be recorded on an SD card ex422. When the recorder ex420 includes the moving picture decoding apparatus as shown in the above-mentioned embodiments, the picture signals recorded on the DVD disk ex421 or the SD card ex422 can be reproduced for display on the monitor ex408.

As for the structure of the car navigation system ex413, the structure without the camera unit ex203, the camera interface unit ex303 and the picture coding unit ex312, out of the components shown in FIG. 33, is conceivable. The same applies for the computer ex111, the television (receiver) ex401 and others.

In addition, three types of implementations can be conceived for a terminal such as the cell phone ex114: a sending/receiving terminal implemented with both an encoder and a decoder, a sending terminal implemented with an encoder only, and a receiving terminal implemented with a decoder only.

As described above, it is possible to use the moving picture coding and decoding methods described in the above-mentioned embodiments 1-5 for any of the above-mentioned apparatuses and systems, and by using these methods, the effects described in the above-mentioned embodiments can be retained.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

**INDUSTRIAL APPLICABILITY**

The moving picture coding apparatus according to the present invention is practical with the use of, for example, a personal computer equipped with a communication function, PDA, a broadcasting station for digital broadcasting and a cell phone.

Also, the moving picture decoding apparatus according to the present invention is practical with the use of, for example, a personal computer equipped with a communication function, PDA, STB for receiving digital broadcasting and a cell phone.

**Claims**

1. A picture decoding apparatus for decoding a coded stream including a moving picture stream that has pictures of different sizes, with reference to a decoded picture, the apparatus comprising:

   a picture memory including a memory area for holding decoded pictures;
   a memory division unit operable to divide the memory area of the picture memory into division areas of a predetermined size; and
   a storage unit operable to sequentially store all data of one newly decoded picture in sequential memory areas which are formed with one or more of the division areas of said picture memory.

2. The picture decoding apparatus according to Claim 1,
   further comprising a size change judgment unit operable to judge whether or not a picture size has been changed by comparing a picture size of a newly decoded picture and a picture size of a picture just decoded before,
      wherein in the case where it is judged that the picture size of the newly decoded picture has been changed, said memory division unit divides the memory area so that the size of the division area becomes the picture size of the newly decoded picture.

3. The picture decoding apparatus according to Claim 2,
      wherein said storage unit includes a first free area estimation unit for estimating whether or not at least one of the division areas is a free area; and in the case where at least one of the division areas is estimated as a free area, said storage unit sequentially stores all the data of the newly decoded picture in the sequential memory area which is one of the estimated division areas.

4. The picture decoding apparatus according to Claim 3,
      wherein said storage unit includes a first picture deletion unit operable to generate the free area by sequentially deleting a picture from the one whose display order is the oldest among the decoded pictures which are already held in said picture memory, and in the case where none of the division areas is estimated as a free area, said storage unit has the first picture deletion unit delete the decoded pictures until at least one of the division areas is estimated as a free area.

5. The picture decoding apparatus according to Claim 4,
      wherein said storage unit further comprises a display possibility judgment unit for judging an impossibility of the display when displaying the decoded picture which is already held in said picture memory in the case where said decoded picture is deleted before being displayed.

6. The picture decoding apparatus according to Claim 2,
      wherein said storage unit includes a division area selection unit for sequentially selecting the division area from the head of said picture memory, and said storage unit sequentially stores all the data of one newly decoded picture in the sequential memory area which is formed with the selected division areas.

7. The picture decoding apparatus according to Claim 6,
      wherein said storage unit includes,
      a second free area estimation unit for estimating whether or not the selected division area is a free area; and
      a second picture deletion unit for making the selected division area a free area by deleting the decoded picture which is stored in the division area in the case where the selected division area is not a free area,
      wherein said storage unit sequentially stores all the data of the newly decoded picture in the sequential memory area which is formed with the selected division areas.

8. The picture decoding apparatus according to Claim 3,
      wherein said storage unit includes,
      a division area selection unit for sequentially selecting the division area from the head of the picture memory in the case where none of the division areas is estimated as a free area;
      a second free area estimation unit for estimating whether or not the selected division area is a free area; and
      a second picture deletion unit for making the selected division area a free area by deleting the decoded picture which is already stored in the division area in the case where the selected division area is not a free area,
      wherein said storage unit sequentially stores all the data of the newly decoded picture in the sequential memory area which is formed with the selected division areas.

9. The picture decoding apparatus according to Claim 1,
   further comprising a reading unit operable to read out division information indicating a division method of the memory area from the coded stream,
      wherein said memory division unit divides the memory area according to the read division information.

10. The picture decoding apparatus according to Claim 9,
      wherein the division information indicates the biggest picture size among the moving picture streams included in the coded stream, and

said memory division unit divides the memory area so that the size of said each division area becomes the picture size indicated by the division information.

**11.** The picture decoding apparatus according to Claim 9,
wherein the division information indicates the number of the division areas in the case where the size of the memory area is divided so that the size of the divided memory area is equal to the biggest picture size, and
said memory division unit divides the memory area into the number of the division areas.

**12.** The picture decoding apparatus according to Claim 9,
wherein the division information indicates the smallest picture size among the moving picture streams included in the coded stream, and
said memory division unit divides the memory area so that the size of said each division area becomes the picture size indicated by the division information.

**13.** The picture decoding apparatus according to Claim 9,
wherein the division information indicates the number of the division areas in the case where the size of the memory area is divided by the smallest picture size, and
said memory division unit divides the memory area into the number of the division areas.

**14.** The picture decoding apparatus according to Claim 9,
wherein the division information indicates the greatest common divisor of the picture sizes of the moving picture streams included in the coded stream, and
said memory division unit divides the memory area so that the size of said each division area becomes the picture size indicated by the division information.

**15.** The picture decoding apparatus according to Claim 9,
wherein a value indicated by the division information is rounded up so that at least the same macroblock is stored within said same division area.

**16.** The picture decoding apparatus according to Claim 9,
wherein a value indicated by the division information is rounded up so that all the macroblocks of one row in horizontal direction in said each decoded picture are stored in said one division area.

**17.** The picture decoding apparatus according to Claim 9,
wherein said memory division unit rounds up the size of the division area so that at least the same macroblock is stored within said same division area.

**18.** The picture decoding apparatus according to Claim 9,
wherein said memory division unit rounds up the size of the division area so that all the macroblocks equivalent to one row, in horizontal direction, in said each decoded picture are stored in said one division area.

**19.** The picture decoding apparatus according to Claim 9,
wherein the division information further includes information indicating whether or not there is a possibility that the decoded picture already stored in the picture memory may be deleted before being displayed.

**20.** The picture decoding apparatus according to Claim 9,
wherein said storage unit includes the first free area estimation unit for estimating whether or not at least one of the division areas within the picture memory is a free area, and
in the case where a sequential memory area formed with one or more of said division area is estimated as a free area, said storage unit sequentially stores all the data equivalent to said one newly decoded picture in the sequential memory area formed with said estimated division area, said sequential memory area being capable of sequentially holding all the data equivalent to said one newly decoded picture.

**21.** The picture decoding apparatus according to Claim 20,
wherein said storage unit includes the first picture deletion unit operable to generate the free area by sequentially deleting the picture from the one whose display order is the oldest among the decoded pictures stored already in the picture memory, and
in the case where the division area is not estimated as a free area, said storage unit has the first picture deletion unit delete the decoded picture until said division area is estimated as a free area, said division area being capable of sequentially holding all the data of said one newly decoded picture.

22. A picture coding apparatus for generating a coded stream by coding a moving picture stream that includes pictures of different sizes, with reference to coded pictures, the apparatus comprising:

a picture size acquisition unit operable to acquire a picture size of a moving picture stream included in a generated coded stream;
a division information generation unit operable to generate division information indicating a division method of a picture memory on the picture decoding apparatus side, based on the acquired picture size; and
a coding unit operable to generate a coded stream including the generated division information.

23. The picture coding apparatus according to Claim 22,
wherein the division information generation unit generates the division information indicating the biggest picture size among the acquired picture sizes.

24. The picture coding apparatus according to Claim 22,
wherein the division information generation unit generates the division information indicating the smallest picture size among the acquired picture sizes.

25. A picture decoding method for storing a decoded picture in a picture memory and decoding a coded stream including a moving picture stream that has pictures of different sizes, with reference to said decoded picture, comprising:

a memory division step for dividing the memory area of the picture memory into division areas of a predetermined size; and
a storage step for sequentially storing all data of one newly decoded picture in the sequential memory areas which are formed with one or more division areas of the picture memory.

26. The picture decoding method according to Claim 25,
further comprising a size change judgment step for judging whether or not the picture size has been changed by comparing the picture size of a newly decoded picture and the picture size of a just decoded picture,
wherein in the case where it is judged that the picture size of the newly decoded picture has been changed, the memory division step divides the memory area so that the size of the division area becomes the picture size of the newly decoded picture.

27. The picture decoding method according to Claim 26,
wherein the storage step includes a first free area estimation step for estimating whether or not at least one of the division areas is a free area; and in the case where at least one of the division areas is estimated as a free area, the storage step sequentially stores all the data of one newly decoded picture in the sequential memory area which is one of the estimated division areas.

28. The picture decoding method according to Claim 27,
wherein the storage step includes a first picture deletion step for generating the free area by sequentially deleting a picture from the one whose display order is the oldest among the decoded pictures which are already stored in the picture memory, and in the case where none of the division areas is estimated as a free area, the storage step has the first picture deletion step delete the decoded pictures until at least one of the division areas is estimated as a free area.

29. The picture decoding method according to Claim 26,
wherein the storage step includes a division area selection step for sequentially selecting the division area from the head of the picture memory, and the storage step sequentially stores all the data of the newly decoded picture in the sequential memory area which is formed with the selected division areas.

30. The picture decoding method according to Claim 29,
wherein the storage step includes,
a second free area estimation step for estimating whether or not the selected division area is a free area; and
a second picture deletion step for making the selected division area a free area by deleting the decoded picture which is stored in the division area in the case where the selected division area is not a free area,
wherein the storage step sequentially stores all the data of the newly decoded picture in the sequential memory area which is formed with the selected division areas.

31. A picture coding method generating a coded stream by coding a moving picture stream that includes pictures of different sizes, with reference to coded pictures, comprising:

a picture size acquisition step for acquiring a picture size of a moving picture stream included in a generated coded stream;
a division information generation step for generating division information indicating a division method of a picture memory on the picture decoding apparatus side, based on the acquired picture size; and
a coding step for generating a coded stream including the generated division information.

32. A program for a picture decoding apparatus storing decoded pictures in a picture memory and decoding a coded stream including a moving picture stream that has pictures of different sizes, with reference to a decoded picture, having a computer perform following steps:

a memory division step for dividing the memory area of the picture memory into division areas of a predetermined size; and
a storage step for sequentially storing all data of one newly decoded picture in the sequential memory areas which are formed with one or more division areas of the picture memory.

33. A program for a picture coding apparatus generating a coded stream by coding a moving picture stream that includes pictures of different sizes, with reference to a coded picture, having a computer perform following steps:

a picture size acquisition step for acquiring a picture size of a moving picture stream included in a generated coded stream;
a division information generation step for generating division information indicating a division method of a picture memory on the picture decoding apparatus side, based on the acquired picture size; and
a coding step for generating a coded stream including the generated division information.

# FIG. 1

EP 1 601 206 A1

FIG. 2

Coded stream → **Coded stream analysis unit** (201) → **Prediction residual decoding unit** (202) → (211) ⊕ → (212) → **Picture memory** (203) → Outputted picture

200

**Motion compensation decoding unit** (204)

**Motion vector memory unit** (205)

**Picture memory control unit** (206)

EP 1 601 206 A1

FIG. 3

Change in picture size

(a) P0 P1 P2 P3 P4 P5 P6 — P7 P8

(b) P0 P3 P1 P2 P6 P4 P5 — P7 P8

## FIG. 4

```
        ┌─────────────┐
        │    Start    │
        └─────────────┘
               │
               ▼
   ┌──────────────────────┐      S401
   │ Decode current       │
   │ picture              │
   └──────────────────────┘
               │
               ▼
      ╱──────────────────╲        N
     ⟨  Enough free area? ⟩──────────────┐
      ╲──────────────────╱   S402        │
               │ Y              S403      ▼
               │  S404     ┌──────────────────────┐
               ▼           │ Delete picture       │
   ┌──────────────────────┐│ whose display        │
   │ Store a              ││ order is the oldest  │
   │ reconstructed        │└──────────────────────┘
   │ picture signal in    │
   │ a free area          │
   └──────────────────────┘
               │
               ▼
        ┌─────────────┐
        │     End     │
        └─────────────┘
```

FIG. 5A

FIG. 5B

## FIG. 6A

| | | P2 | P6 | P4 | P5 | | C |

| C | | P2 | P6 | P4 | P5 |

## FIG. 6B

| P3 | (P1) | P2 | P6 | P4 | P5 | | C |

| P3 | C | P2 | P6 | P4 | P5 |

FIG. 7A

FIG. 7B

## FIG. 8

Inputted picture → **Picture memory** (101) → ... → **Prediction residual coding unit** (102) → **Coded stream generation unit** (103) → Coded stream

**Picture memory dividing information coding unit** (801)

114

112

115

**Prediction residual decoding unit** (104)

113

**Motion vector memory unit** (108)

**Motion compensation coding unit** (107)

**Motion vector estimation unit** (106)

**Picture memory** (105)

**Picture memory control unit** (109)

800

EP 1 601 206 A1

## FIG. 9A

Slice data

Picture common information

| ...... | | max_size | | | Slice header | reset_flag | | | ...... |

## FIG. 9B

Slice data

Picture common information

| ...... | | min_area_num | | | Slice header | reset_flag | | | ...... |

EP 1 601 206 A1

38

## FIG. 10A

Slice data

Picture common information

...... | | max_size | | cnf_flag | |

Slice header

| reset_flag | | | ......

## FIG. 10B

Slice data

Picture common information

...... | | min_area_num | | cnf_flag | |

Slice header

| reset_flag | | | ......

EP 1 601 206 A1

FIG. 11

1100

Coded stream → **Coded stream analysis unit** (201) → **Prediction residual decoding unit** (202)

**Picture size change judgment unit** (207)

(+) (211)

(212)

**Picture memory** (203) → Outputted picture

**Motion compensation decoding unit** (204)

**Motion vector memory unit** (205)

**Picture memory dividing method specification unit** (210) → **Picture memory control unit** (206) ← **Deletable picture area judgment unit** (209)

FIG. 12

```
                    ┌─────────┐
                    │  Start  │
                    └────┬────┘
                         │  S1201
              ╱──────────┴──────────╲   N
             ╱      Beginning         ╲─────────┐
             ╲  picture of sequence?  ╱         │
              ╲──────────┬──────────╱           │
                         │ Y  S1202             │
              ┌──────────┴──────────┐           │
              │ Divide picture memory│          │
              │ into picture areas   │          │
              └──────────┬──────────┘           │
                         │◄──────────────────────┘
              ┌──────────┴──────────┐  S1203
              │ Decode current picture│
              └──────────┬──────────┘
                         │  S1204
              ╱──────────┴──────────╲   N
             ╱   Picture size changed? ╲──────────────┐
             ╲──────────┬──────────╱                  │
                         │ Y  S1205                    │
              ╱──────────┴──────────╲   N              │
             ╱     reset_flag==1?     ╲───────┐        │
             ╲──────────┬──────────╱          │        │
                         │ Y  S1206            │        │
```

S1208 — Judge picture area to be deleted for saving picture to be decoded

S1211 — Judge picture area to be deleted for saving picture to be decoded

S1206 — Delete all picture areas in picture memory

S1209 — Delete specified picture area from picture memory

S1212 — Delete specified picture area from picture memory

S1207 — Save decoded picture in picture memory

S1210 — Save decoded picture in picture memory

S1213 — Save decoded picture in picture memory

```
                    ┌─────────┐
                    │   End   │
                    └─────────┘
```

## FIG. 13A

## FIG. 13B

## FIG. 14A

## FIG. 14B

## FIG. 15A

Slice data

Picture common information

... | | min_size | |

Slice header

| reset_flag | | | ...

## FIG. 15B

Slice data

Picture common information

... | | one_mem_size | |

Slice header

| reset_flag | | | ...

## FIG. 15C

Slice data

Picture common information

... | | area_num | |

Slice header

| reset_flag | | | ...

EP 1 601 206 A1

FIG. 16A

FIG. 16B

EP 1 601 206 A1

FIG. 17A

Slice data

Picture common information

Slice header

···  | | min_size | | cnf_flag | |

| reset_flag | | | ···

FIG. 17B

Slice data

Picture common information

Slice header

···  | | one_mem_size | | cnf_flag | |

| reset_flag | | | ···

FIG. 17C

Slice data

Picture common information

Slice header

···  | | area_num | | cnf_flag | |

| reset_flag | | | ···

FIG. 18A

FIG. 18B

FIG. 19A

P7 | P7 | | P4 | P5          C | C

P7 | P7 | C | C | P4 | P5

FIG. 19B

P7 | P7 | (P2) | P6 | (P4) | P5          C | C

P7 | P7 | C | P6 | C | P5

FIG. 20

2000

EP 1 601 206 A1

## FIG. 21

```
                    ┌──────────┐
                    │  Start   │
                    └──────────┘
                         │
                         ▼
              ╱───────────────────╲  N
             ╱   Size changed?      ╲──────────────┐
             ╲                      ╱               │
              ╲───────────────────╱  S2301         │
                         │ Y                        │
                         ▼                          │
         ┌────────────────────────────┐            │
         │ Acquire picture size of    │  S2302     │
         │ current picture to be      │            │
         │ decoded                    │            │
         └────────────────────────────┘            │
                         │                          │
                         ▼                          │
         ┌────────────────────────────┐  S2303     │
         │ Divide picture memory      │            │
         │ by acquired picture size   │            │
         └────────────────────────────┘            │
                         │◄─────────────────────────┘
                         ▼
              ╱───────────────────╲  N
             ╱  Enough free area?   ╲──────────┐
             ╲                      ╱           │
              ╲───────────────────╱  S2304      │
                         │ Y                     ▼        S2305
                         │          ┌────────────────────────────┐
                         │          │ Sequentially delete        │
                         │          │ pictures in picture memory │
                         │          │ from the one whose display │
                         │          │ order is the oldest until  │
                         │          │ one divided picture area   │
                         │          │ becomes free area          │
                         │          └────────────────────────────┘
                         │◄─────────────────┘
                         ▼
         ┌────────────────────────────┐  S2306
         │ Accumulate newly decoded   │
         │ picture in free area       │
         └────────────────────────────┘
                         │
                         ▼
                    ┌──────────┐
                    │   End    │
                    └──────────┘
```

FIG. 22A

FIG. 22B

EP 1 601 206 A1

FIG. 23A

P1 | P2 | P3

C

P1 | C | P2 | P3

FIG. 23B

P3 | P2 | (P1) | P4

C

P3 | P2 | C | P4

EP 1 601 206 A1

## FIG. 24

```
                    ┌──────────┐
                    │  Start   │
                    └──────────┘
                         │
                         ▼
              ┌───────────────────┐   N
              │  Size changed?    │────────┐
              └───────────────────┘        │
                       │ Y     S2601        │
                       ▼                    │
         ┌─────────────────────────┐ S2602 │
         │ Acquire picture size of │       │
         │ current picture to be   │       │
         │ decoded                 │       │
         └─────────────────────────┘       │
                       │                    │
                       ▼                    │
         ┌─────────────────────────┐ S2603 │
         │ Divide picture memory   │       │
         │ by acquired picture size│       │
         └─────────────────────────┘       │
                       │◄───────────────────┘
                       ▼
              ┌───────────────────┐   N
              │ Enough free area? │──────────────┐
              └───────────────────┘              │
                       │ Y    S2604              │
                       │                          ▼        S2605
                       │            ┌───────────────────────────┐
                       │            │ Sequentially delete       │
                       │            │ pictures in picture       │
                       │            │ memory from head until    │
                       │            │ one divided picture area  │
                       │            │ becomes free area         │
                       │            └───────────────────────────┘
                       │◄───────────────────┘
                       ▼
         ┌─────────────────────────┐ S2606
         │ Accumulate newly decoded│
         │ picture in free area    │
         └─────────────────────────┘
                       │
                       ▼
                  ┌──────────┐
                  │   End    │
                  └──────────┘
```

## FIG. 25

```
                    ┌─────────────┐
                    │    Start    │
                    └─────────────┘
                           │          S2501
                           ▼
              ┌──────────────────────────┐
              │ Delete picture within    │
              │ picture area indicated   │
              │ by pointer               │
              └──────────────────────────┘
                           │
                           ▼            S2502
                     ╱──────────╲
                    ╱ Has picture ╲      N
                   ╱ area become    ╲─────────────┐
                    ╲ free area?    ╱              │
                     ╲──────────╱                  ▼           S2503
                         │ Y          S2504   ┌──────────────┐
                         ▼                    │ Delete next  │
              ┌──────────────────────┐        │ picture      │
              │  Increment pointer   │        └──────────────┘
              └──────────────────────┘              │
                         │                          │
                         ▼           S2505          │
                   ╱──────────╲                     │
                  ╱ Pointer≧    ╲    N               │
                 ╱ Number of all ╲───────┐          │
                  ╲ picture area? ╱       │          │
                   ╲──────────╱           │          │
                         │ Y      S2506   │          │
                         ▼                │          │
              ┌──────────────────┐        │          │
              │   Pointer=0      │        │          │
              └──────────────────┘        │          │
                         │◄───────────────┘          │
                         ▼                           │
                    ┌─────────────┐                  │
                    │     End     │                  │
                    └─────────────┘                  │
```

FIG. 26A

FIG. 26B

EP 1 601 206 A1

FIG. 27A

FIG. 27B

## FIG. 28

Inputted picture → **Picture memory** (101) → − (112) → [114] → **Prediction residual coding unit** (102) → **Coded stream generation unit** (103) → Coded stream

**Prediction residual decoding unit** (104)

[115] → + (113)

**Motion vector memory unit** (108)

**Motion compensation coding unit** (107)

**Picture size change judgment unit** (110)

**Motion vector estimation unit** (106)

**Picture memory** (105)

**Picture memory control unit** (109)

EP 1 601 206 A1

2700

## FIG. 29

EP 1 601 206 A1

Fig. 30A

Se

Tr

FD

Fig. 30B

FD

F

Fig. 30C

Cs

FDD

F

## Fig. 31

Streaming server ex103

LSI ex117

Camera ex116

Computer ex111

ex107

Internet ex101

Telephone network ex104

ex108

PDA ex112

ex109

Camera ex113

Internet service provider ex102

ex110

Cell phone ex115

Cell phone ex114

ex100

EP 1 601 206 A1

# Fig. 32

ex201

ex208

ex202

ex203

ex204

ex206

ex207

SD

manner

ex205

ex115

Fig. 33

ex313 — LCD control unit ex302

Display unit ex202

Power supply circuit unit ex310 — To each unit

Main control unit ex311

Operation input control unit ex304 — Operation keys ex204

Picture coding unit ex312

Camera I/F unit ex303 — Camera unit ex203

Picture decoding unit ex309

Multiplexing/demultiplexing unit ex308

Read/write unit ex307 — Recording medium ex207

Modem circuit unit ex306 — Communication circuit unit ex301 — ex201

Voice processing unit ex305 — Voice input unit ex205

Voice output unit ex208

ex115

## Fig. 34

ex402

Monitor ex404

Reproduction apparatus ex403

Broadcast satellite ex410

Antenna ex411

Car ex412

Antenna ex406

Car navigation system ex413

Cable ex405

Broadcast station ex409

ex421

ex422

Monitor ex408

STB ex407

TV ex401

SD

Recorder ex420

EP 1 601 206 A1

## INTERNATIONAL SEARCH REPORT

| International application No. |
|---|
| PCT/JP2004/001541 |

A. CLASSIFICATION OF SUBJECT MATTER
   Int.Cl⁷ H04N7/32

According to International Patent Classification (IPC) or to both national classification and IPC

B. FIELDS SEARCHED

Minimum documentation searched (classification system followed by classification symbols)
   Int.Cl⁷ H04N7/24-7/68

Documentation searched other than minimum documentation to the extent that such documents are included in the fields searched
   Jitsuyo Shinan Koho        1922-1996   Kokai Jitsuyo Shinan Koho   1971-2004
   Toroku Jitsuyo Shinan Koho  1994-2004   Jitsuyo Shinan Toroku Koho  1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 8-279763 A  (Discovision Associates),<br>22 October, 1996 (22.10.96),<br>Par. No. [0936]<br>& EP 674443 A2 | 1-33 |
| A | JP 11-298857 A  (Matsushita Electric Industrial Co., Ltd.),<br>29 October, 1999 (29.10.99),<br>Par. Nos. [0023] to [0027], [0060] to [0062]<br>& US 6462744 B1 | 1-33 |
| A | JP 2000-101969 A  (Sony Corp.),<br>07 April, 2000 (07.04.00),<br>Par. No. [0018]<br>(Family: none) | 1-33 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 26 March, 2004 (26.03.04) | 13 April, 2004 (13.04.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| | International application No. |
|---|---|
| | PCT/JP2004/001541 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-16593 A (Mitsubishi Electric Corp.), 19 January, 2001 (19.01.01), Claim 1 & US 6490058 B1 | 1-33 |
| A | JP 8-65686 A (Hitachi, Ltd.), 08 March, 1996 (08.03.96), Par. Nos. [0030] to [0034] & US 5880786 A1 | 1-33 |

Form PCT/ISA/210 (continuation of second sheet) (January 2004)